# EUROPEAN PATENT APPLICATION

(11) **EP 4 765 773 A1**
(43) Date of publication of application: **24.06.2026**
(21) Application number: 23952352.5
(22) Date of filing: 15.09.2023
(51) Int. Cl.: H04L 67/12, H04L 9/40, G16Y 10/75, G16Y 30/10, H04L 12/28, H04W 4/70

(54) **METHOD AND APPARATUS FOR PROVIDING INTERNET OF THINGS SERVICE IN INTERNET OF THINGS SYSTEM SUPPORTING MULTI-MANAGER SERVICE**

(71) Applicant: Samsung Electronics Co., Ltd., Suwon-si, Gyeonggi-do 16677 (KR)
(72) Inventor: JUNG, Sooyeon, Suwon-si Gyeonggi-do 16677 (KR); KIM, Jiin, Suwon-si Gyeonggi-do 16677 (KR); LEE, Jihye, Suwon-si Gyeonggi-do 16677 (KR)
(74) Representative: HGF
(86) International application number: PCT/KR2023/013994
(87) International publication number: WO 2025/058112

(57) **Abstract**

The present disclosure relates to a method and an apparatus for providing an Internet of Things (IoT) service in an IoT system supporting a multi-manager service. According to an embodiment of the present disclosure, a method performed by a first device in an IoT system supporting a multi-manager service comprises the steps of: receiving a first message, which includes first information on a target IoT device registered as a first manager, from a second device by the first device in relation to use of the target IoT device; in response to reception of the first message, transmitting a second message including second information on the first device to the second device; receiving, from the second device, a third message for requesting permission to use the target IoT device; and in response to reception of the third message, transmitting a fourth message including information indicating whether the use is permitted.

## Description

### [Technical Field]

The disclosure relates to a method and a device for providing a communication service for use of an IoT device in an internet of things (IoT) system.

### [Background Art]

The Internet is evolving from the human-centered connection network by which humans create and consume information to the Internet of Things (IoT) network by which information is communicated and processed between things or other distributed components. Another emerging technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment, intelligent Internet Technology (IT) services can be provided to collect and analyze data generated by interconnected things, thereby creating new value for human life. The IoT may have various applications, such as the smart home, smart building, smart city, smart car or connected car, smart grid, health-care, or smart appliance industry, or state-of-the-art medical services, through convergence or integration of conventional information technology (IT) techniques and various industries.

Further, various wireless communication technologies have been developed along with the recent development of information and communication technologies. Among the wireless communication technologies, a wireless local area network (WLAN) is a technology for allowing wireless access to the Internet in a home, an enterprise, or a specific service providing area using an electronic device such as a smartphone or a laptop computer based on radio frequency technology. The WLAN includes various wireless access technologies proposed in Institute of Electrical and Electronics Engineers (IEEE) 802.11x standards, and the WLAN technology is also referred to as a term of, e.g., Wi-Fi.

Further, Matter is being studied as an example of a smart home standard for managing and communication-connecting various smart home devices in an IoT environment. Matter is an integrated open-source connectivity standard for IoT devices, and allows smart devices and platforms to work seamlessly together in an IoT environment.

### [Detailed Description of the Invention]

### [Technical Problem]

The disclosure provides a method and a device for providing an efficient IoT service for use/connection of an IoT device in an IoT system supporting a multi-administrator (multi-admin) function.

Further, the disclosure provides a method and a device for providing an efficient IoT service through a device of a first administrator operating as a home hub in an IoT system supporting a multi-administrator service.

Further, the disclosure provides a method and a device for providing an efficient IoT service through an access point (AP) in an IoT system supporting a multi-administrator service.

Further, the disclosure provides a method and a device for providing a reliable IoT service in an IoT system supporting a multi-administrator service.

### [Technical Solution]

According to an embodiment of the disclosure, a method performed by a first device in an internet of things (IoT) system supporting a multi-administrator service includes receiving, by the first device, a first message including first information about a target IoT device from a second device in connection to use of the target IoT device for which the first device is registered as a first administrator, transmitting, in response to the reception of the first message, a second message including second information about the first device to the second device, receiving a third message requesting permission for use of the target IoT device from the second device, and transmitting, in response to the reception of the third message, a fourth message including information indicating whether the use is permitted.

Further, according to an embodiment of the disclosure, a first device in an IoT system supporting a multi-administrator service includes a transceiver, and a processor configured to receive, through the transceiver, a first message including first information about a target IoT device from a second device in connection to use of the target IoT device for which the first device is registered as a first administrator, transmit, through the transceiver, in response to the reception of the first message, a second message including second information about the first device to the second device, receive, through the transceiver, a third message requesting permission for use of the target IoT device from the second device, and transmit, through the transceiver, in response to the reception of the third message, a fourth message including information indicating whether the use is permitted.

Further, according to an embodiment of the disclosure, a method performed by a second device in an IoT system supporting a multi-administrator service includes transmitting a first request message requesting at least one of first information about at least one first device being a first administrator for at least one IoT device connectable in the IoT system and second information about the at least one connectable IoT device to an access point (AP) of the IoT system, receiving, in response to the first request message, a first response message including at least one of the first information and the second information from the AP, transmitting a second request message requesting permission for use of a target IoT device selected from among the at least one connectable IoT device to a first device being a first administrator of the target IoT device through the AP, and receiving, in response to the transmission of the second request message, a second response message including information indicating whether the use is permitted from the first device through the AP.

Further, according to an embodiment of the disclosure, a second device in an IoT system supporting a multi-administrator service includes a transceiver, and a processor configured to transmit, through the transceiver, a first request message requesting at least one of first information about at least one first device being a first administrator for at least one IoT device connectable in the IoT system and second information about the at least one connectable IoT device to an access point (AP) of the IoT system, receive, through the transceiver, in response to the first request message, a first response message including at least one of the first information and the second information from the AP, transmit, through the transceiver, a second request message requesting permission for use of a target IoT device selected from among the at least one connectable IoT device to a first device being a first administrator of the target IoT device via the AP, and receive, through the transceiver, in response to the transmission of the second request message, a second response message including information indicating whether the use is permitted from the first device via the AP.

### [Brief Description of Drawings]

FIG. 1 is a view illustrating an example of a cloud network-based IoT system.
FIG. 2 is a view illustrating an example of a D2D-based IoT system.
FIG. 3 is a view illustrating a multi-administrator service in an IoT system.
FIG. 4 is a view illustrating an example of a method for providing a home hub-based IoT service in an IoT system supporting a multi-administrator service according to an embodiment of the disclosure.
FIG. 5 is a view illustrating an example of a method for providing an IoT service using a first device being a first administrator of an IoT device as a home hub in an IoT system supporting a multi-administrator service according to an embodiment of the disclosure.
FIGS. 6A and 6B are views illustrating an example of a method for providing an IoT service with an authentication procedure added while using a first device being a first administrator of an IoT device as a home hub in an IoT system supporting a multi-administrator service according to an embodiment of the disclosure.
FIG. 7 is a view illustrating an example of a method for providing an IoT service with an authentication procedure added while using a first device being a first administrator of an IoT device as a home hub in an IoT system supporting a multi-administrator service according to an embodiment of the disclosure.
FIGS. 8A and 8B are views illustrating an example of a method for providing an IoT service using an encrypted onboarding payload while using a first device being a first administrator of an IoT device as a home hub in an IoT system supporting a multi-administrator service according to an embodiment of the disclosure.
FIGS. 9A and 9B are views illustrating an example of a method for providing an IoT service using an encrypted onboarding payload while using a first device being a first administrator of an IoT device as a home hub in an IoT system supporting a multi-administrator service according to an embodiment of the disclosure.
FIG. 10 is a view illustrating an example of a method for providing an AP-based IoT service in an IoT system supporting a multi-administrator service according to an embodiment of the disclosure.
FIG. 11 is a view illustrating an example of a method for storing/registering mapping information between an IoT device and a first administrator (device) in an AP in an IoT system supporting a multi-administrator service according to an embodiment of the disclosure.
FIGS. 12A and 12B are views illustrating an example of a method for providing an IoT service using an AP in an IoT system supporting a multi-administrator service according to an embodiment of the disclosure.
FIGS. 13A and 13B are views illustrating an example of a method for providing an IoT service using an AP in an IoT system supporting a multi-administrator service according to an embodiment of the disclosure.
FIGS. 14A and 14B are views illustrating an example of a method for providing an IoT service using an encrypted onboarding payload while using an AP in an IoT system supporting a multi-administrator service according to an embodiment of the disclosure.
FIGS. 15A and 15B are views illustrating an example of a method for providing an IoT service using an encrypted onboarding payload while using an AP in an IoT system supporting a multi-administrator service according to an embodiment of the disclosure.
FIGS. 16A and 16B are views illustrating an example of a method for providing an IoT service when a first device being a first administrator is in a disconnected state from an AP while using the AP in an IoT system supporting a multi-administrator service according to an embodiment of the disclosure.
FIGS. 17A and 17B are views illustrating an example of a method for providing an IoT service by prioritizing a list of first devices being first administrators while using an AP in an IoT system supporting a multi-administrator service according to an embodiment of the disclosure.
FIG. 18 is a view illustrating a configuration example of a device in a wireless communication system according to an embodiment of the disclosure.

### [Mode for Carrying out the Invention]

Hereinafter, the operational principle of the disclosure is described below with reference to the accompanying drawings. When determined to make the subject matter of the present disclosure unclear, the detailed of the known functions or configurations may be skipped. The terms as used herein are defined considering the functions in the present disclosure and may be replaced with other terms according to the intention or practice of the user or operator. Therefore, the terms should be defined based on the overall disclosure.

For the same reasons, some elements may be exaggerated or schematically shown. The size of each element does not necessarily reflect the real size of the element. The same reference numeral is used to refer to the same element throughout the drawings.

Advantages and features of the present disclosure, and methods for achieving the same may be understood through the embodiments to be described below taken in conjunction with the accompanying drawings. However, the scope of the disclosure is not limited to embodiments described herein, but rather, other various changes may be made thereto. Various embodiments are provided for thorough disclosure of the present invention and making the category of the present invention known to one of ordinary skill in the art, and the present invention is defined only by the claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "...unit" means a software element or a hardware element. The '...unit' plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. Further, in various embodiments of the disclosure, a "...unit" may include one or more processors.

As used herein, each of such phrases as "A or B", "at least one of A and B", "at least one of A or B", "A, B, or C", "at least one of A, B, and C" and "at least one of A, B, or C" may include all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order).

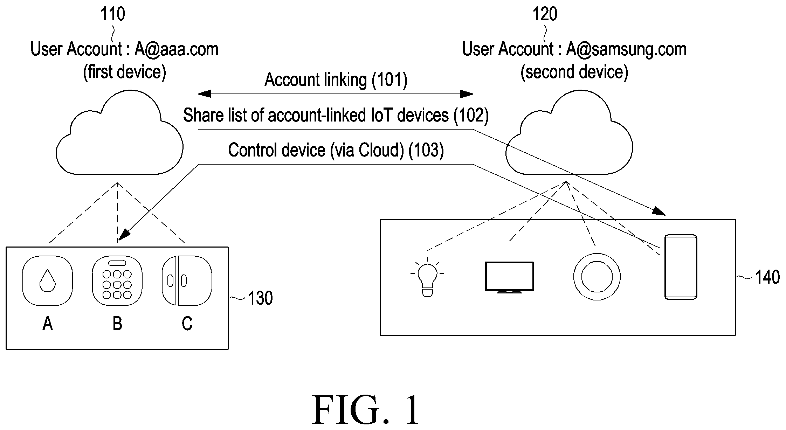

FIG. 1 is a view illustrating an example of a cloud network-based IoT system.

Referring to FIG. 1, a first platform of company A providing an IoT environment and a second platform of company B providing an IoT environment may be connected through a cloud network. For example, it is assumed that a user has a first account (e.g., A@aaa.com) 110 for use of an IoT service in the first platform of company A to which at least one IoT device 130 is connected, and the same or another user has a second account (e.g., A@samsung.com) 120 for use of an IoT service in the second platform of company B to which at least one IoT device 140 is connected.

In the cloud-based IoT system of FIG. 1, the first account (A@aaa.com) 110 is in a state in which ownership for use of the IoT device 130 is registered (i.e., registered as a first administrator (admin)/device) in the first platform, and the second account (A@aaa.com) is in a state in which ownership for use of the IoT device 140 is registered (i.e., registered as a first administrator (admin)/device) in the second platform. Further, in the cloud-based IoT system of FIG. 1, through account linking 101 between the first account (A@aaa.com) and the second account (A@aaa.com) 120, the user of the second account 120 may use the IoT device 130 for which ownership is registered with the first account 110 through a second device. In this case, the second device registered with the second account 120 may have a status of a second administrator capable of using the IoT device 130 when there is an approval from a first administrator (admin)/device. Further, IoT device list sharing for the IoT device 130 and the IoT device 140 may be performed between the first device registered with the first account 110 and the second device registered with the second account 120. In the example of FIG. 1, the second device having the status of a second administrator for the IoT device 130 through the account linking 101 may receive an IoT device list of the IoT device 130 from the first device 102.

In the example of FIG. 1, assuming that the first platform and the second platform are always connected through the cloud network, the second device being a second administrator of the IoT device 130 may control an operation of at least one IoT device belonging to the list of the IoT device 130 through the cloud network 103. However, the cloud-based IoT system as in the example of FIG. 1 has a burden of always operating the cloud network.

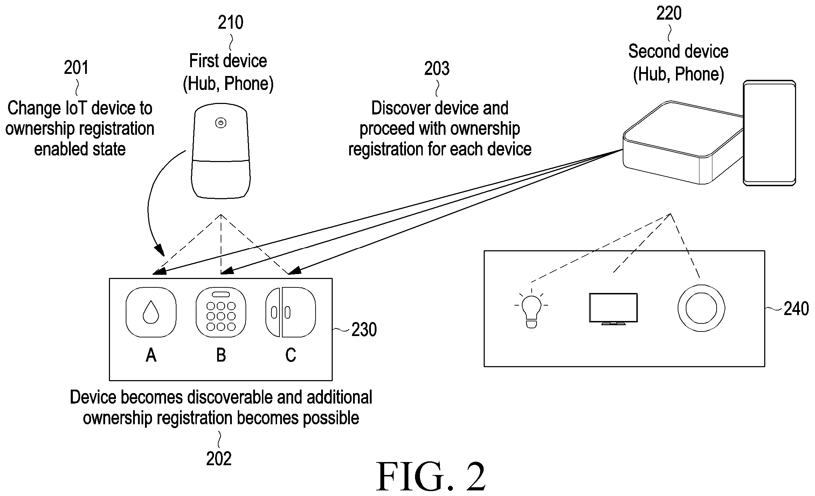

FIG. 2 is a view illustrating an example of a device to device (D2D)-based IoT system.

The example of FIG. 2 illustrates an example of a scheme in which a first device 210 of a first administrator and a second device 220 of a second administrator share an IoT device through D2D communication without using a cloud network as in the example of FIG. 1 for use/sharing of an IoT device owned by another administrator. The first device 210 and the second device 220 may discover an IoT device and control an operation of an IoT device for which ownership is registered using a known D2D communication scheme. The first device 210 and the second device 220 may be various electronic devices such as a hub, a smartphone, a laptop, or a tablet capable of controlling an operation of an IoT device. In FIG. 2, it is assumed that the first device 210 operates as a first administrator for at least one IoT device 230, and the second device 220 operates as a first administrator for at least one IoT device 240. In the disclosure, that a predetermined device operates as a first administrator (first admin) for a first IoT device means that the device is in a state in which ownership for use of the first IoT device is registered or the device has received use approval for the first IoT device from another device registered as a first administrator for the first IoT device. Referring to FIG. 2, in step 201, the first device 210 may change a state of the IoT device 230 to a state in which ownership registration of the IoT device 230 is possible at the second device 220 so that use of the IoT device 230 is possible at the second device 220. In step 202, the IoT device 230 changed to the registration-possible state may be discovered at the second device 220, and is switched to a state in which additional registration of the second device 220 as a first administrator in addition to the first device 210 is possible. In step 203, the second device 220 may discover the IoT device 230 and perform ownership registration for use of the IoT device 230 to be added as a first administrator of the IoT device 230. However, the example of FIG. 2 requires a state change of the IoT device 230 at the first device 210 in advance so that discovery and ownership registration of the IoT device 230 are possible at the second device 220.

For definition of terms used in the disclosure, registering/connecting an IoT device to an IoT platform (e.g., various platforms such as Samsung's SmartThings) for operation control/use of the IoT device is referred to as commissioning, device onboarding, or paring (hereinafter "commissioning"). Further, a service capable of registering a plurality of devices as the first administrator for an IoT device is referred to as a multi-administrator (multi-admin) service. As an optional embodiment, an administrator permitted to have the same use rights as a first administrator for an IoT device may be referred to as a second administrator, distinguished from a first administrator having original ownership for the IoT device. Hereinafter, in embodiments of the disclosure, an administrator (device) having ownership (registered use rights) for an IoT device is collectively referred to as a first administrator for convenience of description.

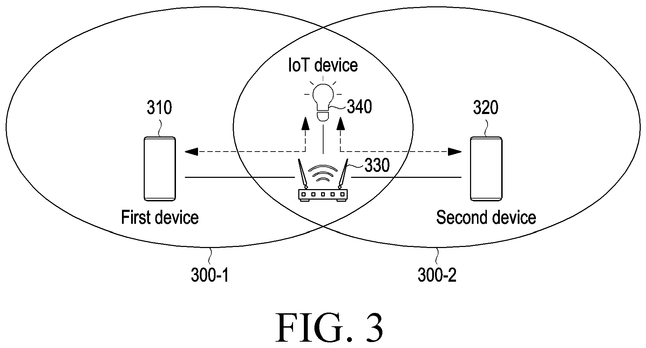

FIG. 3 is a view illustrating a multi-administrator service in an IoT system.

The example of FIG. 3 assumes a circumstance in which a first device 310 is registered and operates in a first platform 300-1 for an IoT service, a second device 320 is registered and operates in a second platform 300-2 for an IoT service, and the first device 310 is registered as a first administrator for an IoT device 340. When a multi-administrator service is supported between the first platform 300-1 and the second platform 300-2, the first device 310 may set an operation mode of the IoT device 230 to a commissioning mode (i.e., registration mode) through an access point (AP) 330 so that registration of the IoT device 340 (i.e., additional registration of a first administrator) is possible at the second device 320. Further, in FIG. 3, the first device 310 being a first administrator of the IoT device 340 may provide an onboarding payload, which is information required to register the second device 320 as an additional first administrator of the IoT device 340 in the registration mode, to the second device 320. The onboarding payload may use information such as a quick response (QR) code, a personal information number (PIN), or the like, for example. As in the example of FIG. 3, in an IoT system (eco system) in which different platforms for an IoT service coexist, a multi-administrator service may enhance user convenience of an IoT service.

For efficient/reliable use of the multi-administrator service in an IoT system, a second device should be able to easily discover a first device being a first administrator of an IoT device. Further, the second device should be able to easily identify an IoT device that may be used through a multi-administrator service. Further, a scheme for providing the onboarding payload to the second device is required so that the second device may safely use an IoT device through a multi-administrator service.

To this end, the disclosure proposes various embodiments in which the second device may easily discover the first device and the IoT device and may safely receive the onboarding payload at the second device between the first device being a first administrator of the IoT device and the second device intending to use the IoT device without the above-described account linking.

The embodiments of the disclosure to be described below are described by dividing into embodiments in which a first device being a first administrator of an IoT device operates as a home hub in an IoT system (e.g., a smart home system) and a second device intending to use an IoT device through a multi-administrator service receives permission to use the IoT device from the first device, and embodiments in which information about a target IoT device may be provided to a second device through an AP of the IoT system and a second device intending to use a target IoT device in an IoT system supporting a multi-administrator service receives permission to use the target IoT device from a first device through the AP.

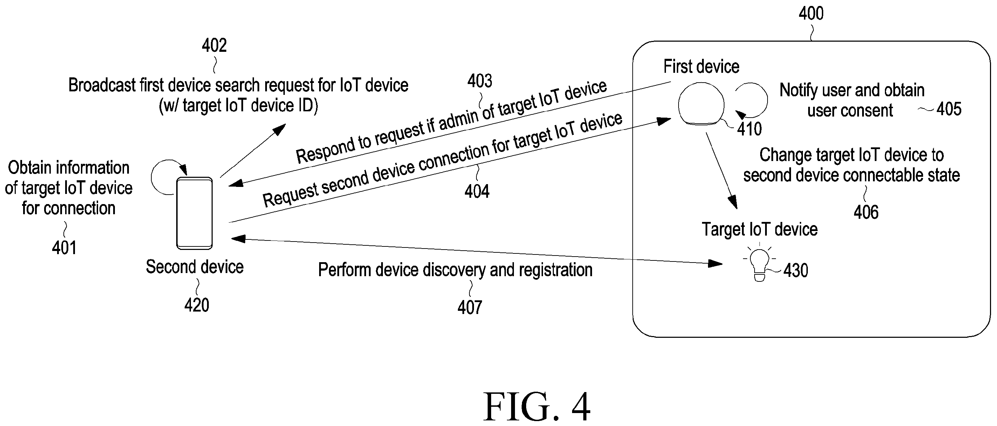

FIG. 4 is a view illustrating an example of a method for providing a home hub-based IoT service in an IoT system supporting a multi-administrator service according to an embodiment of the disclosure.

The example of FIG. 4 illustrates a case in which a first device being a first administrator of a target IoT device operates as a home hub in an IoT system. In the example of FIG. 4, the first device 410 and the target IoT device 430 are registered or subscribed to a network service 400 providing, e.g., a platform-based IoT service, and the second device 420 may use the target IoT device 430 through a multi-administrator service.

Referring to FIG. 4, in step 401, the second device 420 may obtain information about the target IoT device 430 (hereinafter, IoT device information) using, e.g., a scheme known in the Matter standard or a QR code attached to the target IoT device 430. The IoT device information may include an IoT device ID (identifier), descriptor information of the IoT device, or the like. In step 402, the second device 420 may broadcast a first message for discovering the first device 410 being a first administrator of the target IoT device 430 that the second device 420 intends to use in a network using, e.g., Bluetooth low energy (BLE) which is a low power Bluetooth communication scheme, Wi-Fi Aware unsynchronized service discovery (USD), domain name system service discovery (DNS-SD) which is a communication scheme for DNS (domain name system)-based service discovery, a Wi-Fi probing message, or the like. The first message may include an IoT device ID.

In step 403, the first device 410 receiving the first message may transmit a second message to the second device 420 in response to the first message. The second message may include an ID of the first device 410, administrator descriptor information, or the like. Here, the ID of the first device 410 corresponds to a first administrator ID. Hereinafter, in embodiments of the disclosure, an ID of a first device operating as a first administrator may be understood as a first administrator ID.

In step 404, the second device 420 receiving the second message may transmit a third message for requesting connection to the target IoT device 430 to the first device 420. The third message may include, e.g., at least one of an ID of the target IoT device 430, an ID of the first device 410, an ID of the second device 420, and descriptor information.

In step 405, the first device 410 receiving the third message may output an alarm message (e.g., a text, sound, or video message) or the like notifying a user of the first device 410 that there is a connection request for the target IoT device 430 from the second device 420, and may obtain a consent/rejection input of the user of the first device 410 in response to the output.

As an optional embodiment, although not illustrated, the first device 410 may transmit a fourth message indicating consent/rejection of the connection request for the IoT device 430 to the second device 420 in response to the third message. As an optional embodiment, although not illustrated, in case of consent to the connection request, the first device 410 may provide an onboarding payload, which is information required for the second device 420 to be registered as an additional first administrator of the target IoT device 430 in a commissioning mode (i.e., registration mode), to the second device 420 in response to the third message.

When the first device 410 obtains a consent input of the user in step 405, in step 406, the first device 410 may set/change an operation mode of the target IoT device 430 to the registration mode so that registration of the target IoT device 430 (additional registration of a first administrator) is possible at the second device 420. Thereafter, in step 407, the second device 420 may perform registration (commissioning) for the target IoT device 430 changed to the registration mode to be additionally registered as a first administrator of the target IoT device 430. In the disclosure, the registration may include discovery and/or connection of the target IoT device 430 at the second device 420. As an optional embodiment, the onboarding payload may be used when additionally registering as the first administrator.

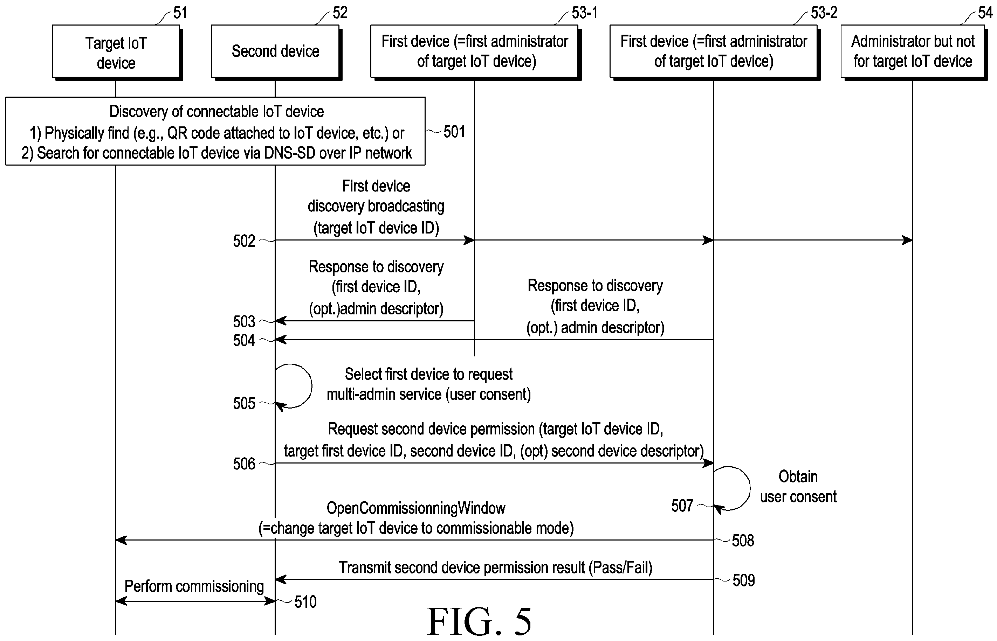

FIG. 5 is a view illustrating an example of a method for providing an IoT service using a first device being a first administrator of an IoT device as a home hub in an IoT system supporting a multi-administrator service according to an embodiment of the disclosure.

In the example of FIG. 5, the IoT system illustrates an IoT service environment including a target IoT device 51, a second device 52 intending to use the target IoT device 51 through a multi-administrator service, a plurality of first devices 53-1 and 53-2 for which ownership is registered (i.e., registered as a first administrator) for the target IoT device 51, and a device 54 being a first administrator of another IoT device (not illustrated) not having ownership (i.e., not being a first administrator) for the target IoT device 51. In the example of FIG. 5, the target IoT device 51 and the second device 52 are each illustrated as one device for convenience of description, but a plurality of target IoT devices and a plurality of second devices may be present. Further, there may be one or more first devices registered as a first administrator for the target IoT device 51.

Referring to FIG. 5, in step 501, the second device 52 discovers a connectable target IoT device 51. In this case, the second device 52 may discover a connectable target IoT device 51, e.g., by DNS-SD through an IP (internet protocol) network or using a QR code or the like physically attached to the target IoT device 51. In this case, the second device 52 may obtain information about the target IoT device 51. The information about the target IoT device 51 may include, e.g., an ID of the target IoT device 51, descriptor information, or the like.

In step 502, the second device 52 having found the target IoT device 51 to be used may broadcast a first message including an ID of the target IoT device 51 in a network to discover a first device being a first administrator of the target IoT device 51. The plurality of first devices 53-1 and 53-2 and the device 54 being a first administrator of another IoT device may receive the first message. As an optional embodiment, the first message may further include descriptor information of the target IoT device 51. The descriptor information may be, e.g., information indicating a smart light when the target IoT device 51 is a smart light. As an optional embodiment, it may also be possible to transmit the first message by a group cast or unicast scheme.

In steps 503 and 504, the plurality of first devices 53-1 and 53-2 receiving the first message including the ID of the target IoT device 51 may each transmit a second message including its own device ID (or administrator ID) to the second device 52 in response thereto. In this case, the device 54 not being a first administrator of the target IoT device 51 does not transmit the second message to the second device 52. As an optional embodiment, the second message may further include administrator descriptor information of the corresponding first device 53-1 or 53-2. The administrator descriptor information may be, e.g., information indicating that the corresponding first device 53-1 or 53-2 is a first administrator of the target IoT device 51. As an example, when a first device is a smart speaker operating as a hub in an IoT system and pre-registered descriptor information of a first administrator is "Joe's speaker", a description such as "Joe's speaker" may be provided as the administrator descriptor information.

In step 505, the second device 52 receiving the second message from each of the plurality of first devices 53-1 and 53-2 may select a first device (53-1 or 53-2) to request/apply for a multi-administrator service from among the plurality of first devices 53-1 and 53-2. In this case, the selection may be performed through a consent input or the like of a user of the second device 52. In the present embodiment, it is assumed that the first device 53-2 is selected as a target for request/application of a multi-administrator service. In step 506, the second device 52 may transmit a third message including at least one of an ID of the target IoT device 51, an ID of the selected target first device 53-2, and an ID of the corresponding second device 52 to the first device 53-2. The third message is a message requesting the first device 53-2 to permit the second device 52 as a multi-administrator for the target IoT device 51. As an optional embodiment, the third message may further include at least one of administrator descriptor information of the first device 53-2 and descriptor information of the second device 52.

In step 507, the first device 53-2 receiving the third message for requesting permission of a multi-administrator from the second device 52 may consent/reject permitting the second device 52 as a multi-administrator (i.e., first administrator) for the target IoT device 51. In this case, the consent/rejection may be performed through a consent/rejection input or the like of a user of the first device 53-2. In step 508, the first device 53-2 identifying the consent input may set/change an operation mode of the target IoT device 51 to the above-described registration mode (commissioning mode) so that registration (commissioning) of the target IoT device 51 (i.e., additional registration of a first administrator) is possible at the second device 52.

Thereafter, in step 508, the first device 53-2 may transmit, in response to the third message, a fourth message including information indicating whether to permit the second device 52 as a multi-administrator (first administrator) for the target IoT device 51 to the second device 52. Further, in step 510, the second device 52 receiving the fourth message identifies whether the permission is granted, and if permitted, performs registration (commissioning) for use of the target IoT device 51. The registration may include discovery and/or connection of the target IoT device 51 at the second device 52.

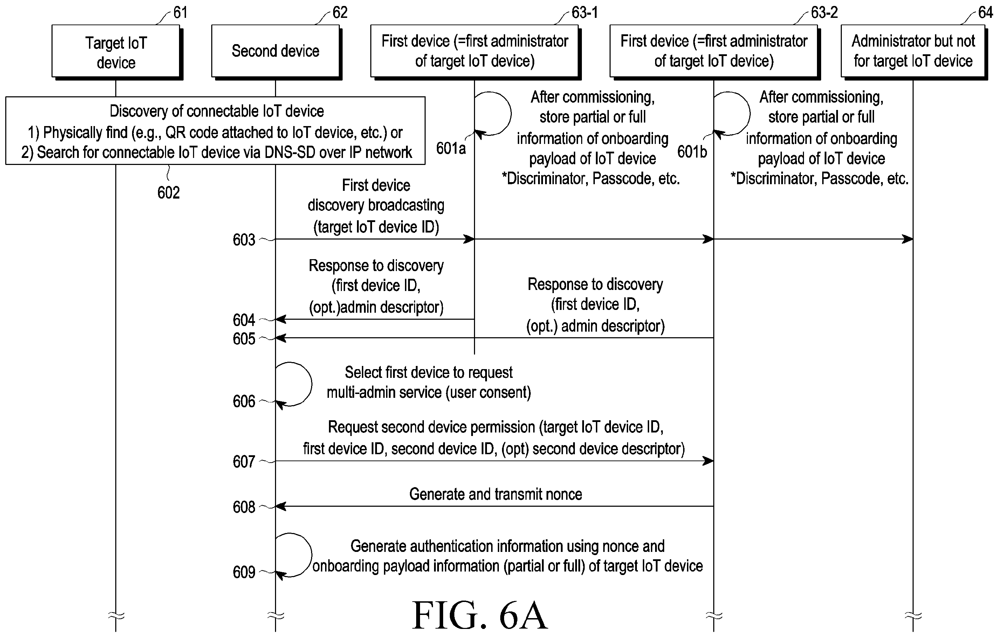

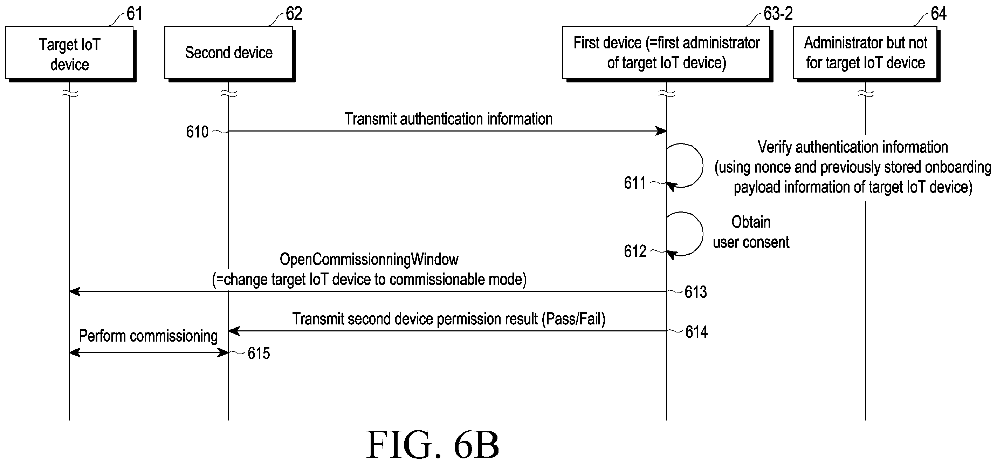

FIGS. 6A and 6B are views illustrating an example of a method for providing an IoT service with an authentication procedure added while using a first device being a first administrator of an IoT device as a home hub in an IoT system supporting a multi-administrator service according to an embodiment of the disclosure.

In the examples of FIGS. 6A and 6B, the IoT system illustrates an IoT service environment including a target IoT device 61, a second device 62 intending to use the target IoT device 61 through a multi-administrator service, a plurality of first devices 63-1 and 63-2 for which ownership is registered (i.e., registered as a first administrator) for the target IoT device 61, and a device 64 being a first administrator of another IoT device (not illustrated) not having ownership (i.e., not being a first administrator) for the target IoT device 61.

In the examples of FIGS. 6A and 6B, the target IoT device 61 and the second device 62 are each illustrated as one device for convenience of description, but a plurality of target IoT devices and a plurality of second devices may be present. Further, there may be one or more first devices registered as a first administrator for the target IoT device 61.

Referring to FIG. 6A, in steps 601a and 601b, the plurality of first devices 63-1 and 63-2 registered as a first administrator for the target IoT device 61 may each store part or all of the above-described onboarding payload required in a multi-administrator service. The onboarding payload is information required for a device other than a first administrator of the target IoT device 61 to be registered as an additional first administrator of the target IoT device 61 in a registration mode (commissioning mode) with the target IoT device 61, and may use information that may be used for registration/authentication such as a discriminator, a passcode, a QR code, a PIN, or the like.

In step 602, the second device 62 discovers a connectable target IoT device 61. In this case, the second device 62 may discover a connectable target IoT device 61, e.g., by DNS-SD through an IP network or using a QR code or the like physically attached to the target IoT device 61. In this case, the second device 62 may obtain information about the target IoT device 61. The information about the target IoT device 61 may include, e.g., an ID of the target IoT device 61, descriptor information, or the like. Further, in step 602, the second device 62 may obtain part or all of an onboarding payload for the target IoT device 61 through a discriminator, a passcode, a QR code, a PIN, or the like of the target IoT device 61.

In step 603, the second device 62 having found the target IoT device 61 to be used may broadcast a first message including an ID of the target IoT device 61 in a network to discover a first device being a first administrator of the target IoT device 61. The plurality of first devices 63-1 and 63-2 and the device 64 being a first administrator of another IoT device may receive the first message. As an optional embodiment, the first message may further include descriptor information of the target IoT device 61. The descriptor information may be, e.g., information indicating a smart light when the target IoT device 61 is a smart light. As an optional embodiment, it may also be possible to transmit the first message by a group cast or unicast scheme.

In steps 604 and 605, the plurality of first devices 63-1 and 63-2 receiving the first message including the ID of the target IoT device 61 may each transmit a second message including its own device ID (or administrator ID) to the second device 62 in response thereto. In this case, the device 64 not being a first administrator of the target IoT device 61 does not transmit the second message to the second device 62. As an optional embodiment, the second message may further include administrator descriptor information of the corresponding first device 63-1 or 63-2. The administrator descriptor information may be, e.g., information indicating that the corresponding first device 63-1 or 63-2 is a first administrator of the target IoT device 61.

In step 606, the second device 62 receiving the second message from each of the plurality of first devices 63-1 and 63-2 may select a first device (63-1 or 63-2) to request/apply for a multi-administrator service from among the plurality of first devices 63-1 and 63-2. In this case, the selection may be performed through a consent input or the like of a user of the second device 62. In the present embodiment, it is assumed that the first device 63-2 is selected as a target for request/application of a multi-administrator service. In step 607, the second device 62 may transmit a third message including at least one of an ID of the target IoT device 61, an ID of the selected first device 63-2, and an ID of the corresponding second device 62 to the first device 63-2. The third message is a message requesting the first device 63-2 to permit the second device 62 as a multi-administrator for the target IoT device 61. As an optional embodiment, the third message may further include at least one of administrator descriptor information of the first device 63-2 and descriptor information of the second device 62.

In step 608, the first device 63-2 receiving the third message for requesting permission of a multi-administrator from the second device 62 may generate a nounce for authentication of the multi-administrator service and transmit the nonce to the second device 62. The nonce means a random variable, a temporary value, or the like used in an authentication procedure. A procedure of performing authentication between two devices using the nonce may use a known authentication technology. In step 609, the second device 62 receiving the nonce may generate first authentication information required to be registered as an additional first administrator of the target IoT device 61 using the nonce and part or all of the onboarding payload obtained in step 602.

Referring to FIG. 6B, in step 610, the second device 62 transmits the first authentication information to the first device 63-2, and in step 611, the first device 63-2 generates second authentication information using part or all of the onboarding payload obtained in step 601b and the nonce generated in step 608, and may perform authentication information verification by comparing whether the received first authentication information and the generated second authentication information are the same. The first device 63-2 determines that verification is successful when the first authentication information and the second authentication information are the same as a result of the comparison.

In step 612, the first device 63-2 receiving the third message for requesting permission of a multi-administrator from the second device 62 may consent/reject permitting the second device 62 as a multi-administrator (i.e., first administrator) for the target IoT device 61 according to the verification result in step 611. In this case, the consent/rejection may be performed through a consent/rejection input or the like of a user of the first device 63-2. In step 613, the first device 63-2 identifying the consent input may set/change an operation mode of the target IoT device 61 to the above-described registration mode (commissioning mode) so that registration of the target IoT device 61 (additional registration of a first administrator) is possible at the second device 62.

Thereafter, in step 614, the first device 63-2 may transmit, in response to the third message, a fourth message including information indicating whether to permit the second device 62 as a multi-administrator (first administrator) for the target IoT device 61 to the second device 62. Further, in step 615, the second device 62 receiving the fourth message identifies whether the permission is granted, and if permitted, performs registration (commissioning) for use of the target IoT device 61. The registration may include discovery and/or connection of the target IoT device 61 at the second device 62.

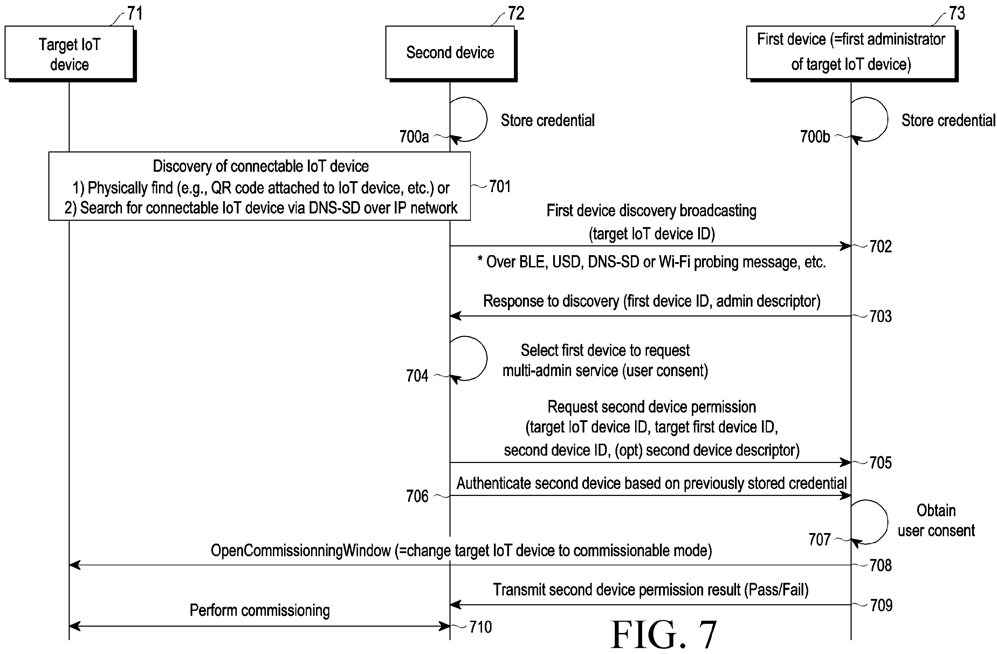

FIG. 7 is a view illustrating an example of a method for providing an IoT service with an authentication procedure added while using a first device being a first administrator of an IoT device as a home hub in an IoT system supporting a multi-administrator service according to an embodiment of the disclosure.

In the example of FIG. 7, the IoT system illustrates an IoT service environment including a target IoT device 71, a second device 72 intending to use the target IoT device 71 through a multi-administrator service, and a first device 73 for which ownership is registered (i.e., registered as a first administrator) for the target IoT device 71.

In the example of FIG. 7, the target IoT device 71, the second device 72, and the first device 73 are each illustrated as one device for convenience, but a plurality of target IoT devices and a plurality of first and second devices may be present. Further, there may be one or more first devices registered as a first administrator for the target IoT device 71.

Referring to FIG. 7, in steps 700a and 700b, it is assumed that the second device 72 and the first device 73 registered as a first administrator for the target IoT device 71 have pre-stored credential information for an authentication procedure required in a multi-administrator service. The credential information may use, e.g., a certificate, shared secret information, or the like.

In step 701, the second device 72 discovers a connectable target IoT device 71. In this case, the second device 72 may discover a connectable target IoT device 71, e.g., by DNS-SD through an IP network or using a QR code or the like physically attached to the target IoT device 71. In this case, the second device 72 may obtain information about the target IoT device 71. The information about the target IoT device 71 may include, e.g., an ID of the target IoT device 71, descriptor information, or the like.

In step 702, the second device 72 having found the target IoT device 71 to be used may broadcast a first message including an ID of the target IoT device 71 in a network to discover a first device being a first administrator of the target IoT device 71. The first message may be transmitted using, e.g., BLE which is a low power Bluetooth communication scheme, USD, DNS-SD which is a communication scheme for DNS-based service discovery, a Wi-Fi probing message, or the like. As an optional embodiment, it may also be possible to transmit the first message by a group cast or unicast scheme.

In step 703, the first device 73 receiving the first message including the ID of the target IoT device 71 may transmit a second message including its own device ID (or administrator ID) to the second device 72 in response thereto. As an optional embodiment, the second message may further include administrator descriptor information of the corresponding first device 73. The administrator descriptor information may be, e.g., information indicating that the corresponding first device 73 is a first administrator of the target IoT device 71. In step 704, the second device 72 receiving the second message from the first device 73 may select a first device 73 to request/apply for a multi-administrator service. In this case, the selection may be performed through a consent input or the like of a user of the second device 72.

In step 705, the second device 72 may transmit a third message including at least one of an ID of the target IoT device 71, an ID of the first device 73, and an ID of the corresponding second device 72 to the first device 73. The third message is a message requesting the first device 73 to permit the second device 72 as a multi-administrator for the target IoT device 71. As an optional embodiment, the third message may further include at least one of administrator descriptor information of the first device 73 and descriptor information of the second device 72.

In step 706, the first device 73 receiving the third message for requesting permission of a multi-administrator from the second device 72 may perform an authentication procedure for the second device 72 based on the credential information pre-stored in steps 700a and 700b for authentication of the multi-administrator service.

According to the authentication result in step 706, in step 707, the first device 73 may consent/reject permitting the second device 72 as a multi-administrator (i.e., first administrator) for the target IoT device 71. In this case, the consent/rejection may be performed through a consent/rejection input or the like of a user of the first device 73. Further, in step 708, the first device 73 identifying the consent input may set/change an operation mode of the target IoT device 71 to the above-described registration mode (commissioning mode) so that registration of the target IoT device 71 (additional registration of a first administrator) is possible at the second device 72.

Thereafter, in step 709, the first device 73 may transmit, in response to the third message, a fourth message including information indicating whether to permit the second device 72 as a multi-administrator (first administrator) for the target IoT device 71 to the second device 72. Further, in step 710, the second device 72 receiving the fourth message identifies whether the permission is granted, and if permitted, performs registration (commissioning) for use of the target IoT device 71. The registration may include discovery and/or connection of the target IoT device 71 at the second device 72.

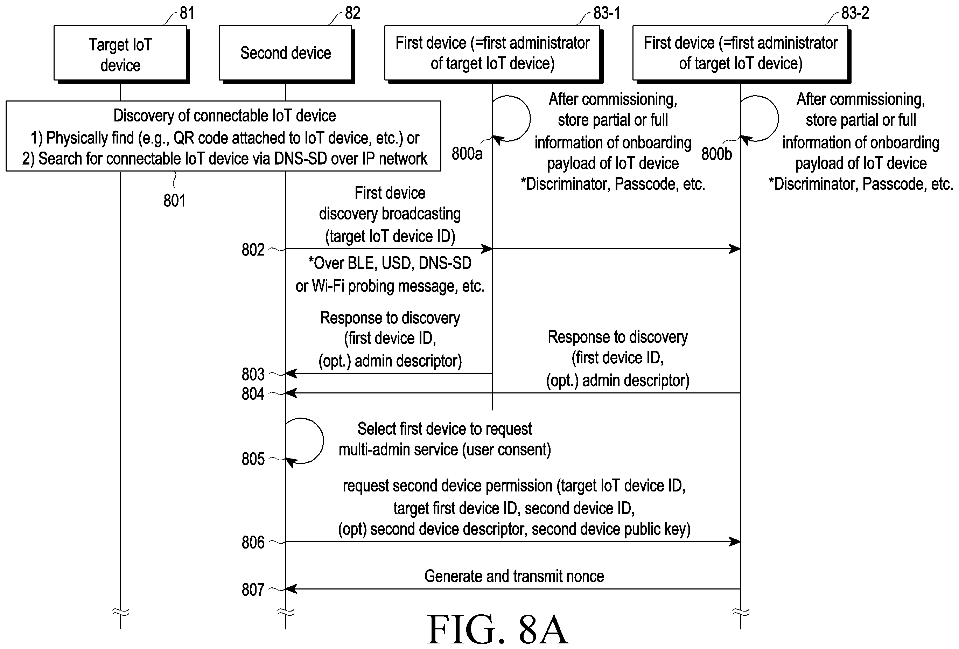

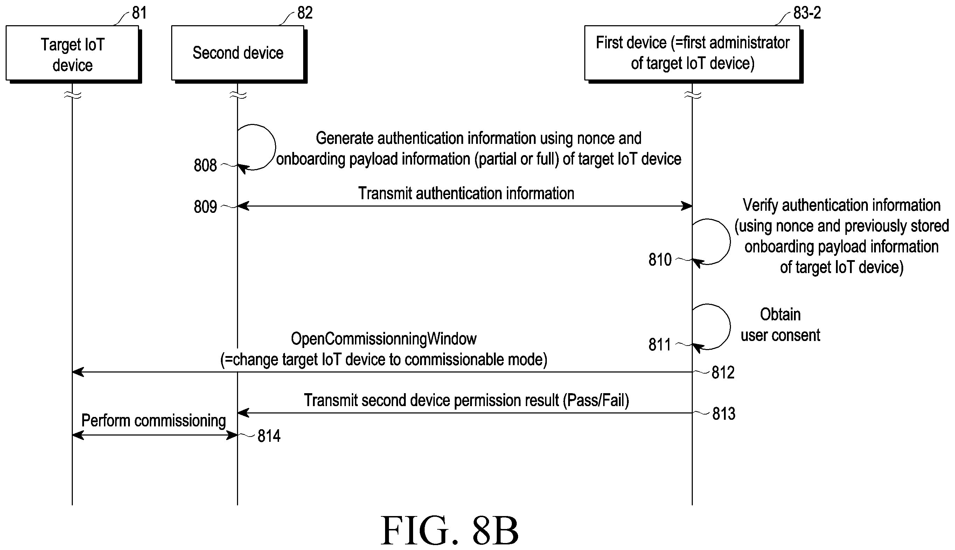

FIGS. 8A and 8B are views illustrating an example of a method for providing an IoT service using an encrypted onboarding payload while using a first device being a first administrator of an IoT device as a home hub in an IoT system supporting a multi-administrator service according to an embodiment of the disclosure.

In the examples of FIGS. 8A and 8B, the IoT system illustrates an IoT service environment including a target IoT device 81, a second device 82 intending to use the target IoT device 81 through a multi-administrator service, and a plurality of first devices 83-1 and 83-2 for which ownership is registered (i.e., registered as a first administrator) for the target IoT device 81.

In the examples of FIGS. 8A and 8B, the target IoT device 81 and the second device 82 are each illustrated as one device for convenience of description, but a plurality of target IoT devices and a plurality of second devices may be present. Further, there may be one or more first devices registered as a first administrator for the target IoT device 81.

Referring to FIG. 8A, in steps 800a and 800b, the plurality of first devices 83-1 and 83-2 registered as a first administrator for the target IoT device 81 may each store part or all of the above-described onboarding payload required in a multi-administrator service. The onboarding payload is information required for a device other than a first administrator of the target IoT device 81 to be registered as an additional first administrator of the target IoT device 81 in a registration mode (commissioning mode) with the target IoT device 81, and may use information that may be used for registration/authentication such as a discriminator, a passcode, a QR code, a PIN, or the like.

In step 801, the second device 82 discovers a connectable target IoT device 81. In this case, the second device 82 may discover a connectable target IoT device 81, e.g., by DNS-SD through an IP network or using a QR code or the like physically attached to the target IoT device 81. In this case, the second device 82 may obtain information about the target IoT device 81. The information about the target IoT device 81 may include, e.g., an ID of the target IoT device 81, descriptor information, or the like. Further, in step 801, the second device 62 may obtain part or all of an onboarding payload for the target IoT device 61 through a discriminator, a passcode, a QR code, a PIN, or the like of the target IoT device 61.

In step 802, the second device 82 having found the target IoT device 81 to be used may broadcast a first message including an ID of the target IoT device 81 in a network to discover a first device being a first administrator of the target IoT device 81. The plurality of first devices 83-1 and 83-2 may receive the first message. As an optional embodiment, the first message may further include descriptor information of the target IoT device 81. The descriptor information may be, e.g., information indicating a smart light when the target IoT device 81 is a smart light. The first message may be transmitted using, e.g., BLE which is a low power Bluetooth communication scheme, USD, DNS-SD which is a communication scheme for DNS-based service discovery, a Wi-Fi probing message, or the like. As an optional embodiment, it may also be possible to transmit the first message by a group cast or unicast scheme.

In steps 803 and 804, the plurality of first devices 83-1 and 83-2 receiving the first message including the ID of the target IoT device 81 may each transmit a second message including its own device ID (or administrator ID) to the second device 82 in response thereto. As an optional embodiment, the second message may further include administrator descriptor information of the corresponding first device 83-1 or 83-2. The administrator descriptor information may be, e.g., information indicating that the corresponding first device 83-1 or 83-2 is a first administrator of the target IoT device 81.

In step 805, the second device 62 receiving the second message from each of the plurality of first devices 83-1 and 83-2 may select a first device (83-1 or 83-2) to request/apply for a multi-administrator service from among the plurality of first devices 83-1 and 83-2. In this case, the selection may be performed through a consent input or the like of a user of the second device 82. In the present embodiment, it is assumed that the first device 83-2 is selected as a target for request/application of a multi-administrator service. In step 806, the second device 82 may transmit a third message including at least one of an ID of the target IoT device 81, an ID of the selected first device 83-2, an ID of the corresponding second device 82, and a public key for encryption of the onboarding payload to the first device 83-2. The third message is a message requesting the first device 83-2 to permit the second device 82 as a multi-administrator for the target IoT device 81. As an optional embodiment, the third message may further include at least one of administrator descriptor information of the first device 83-2 and descriptor information of the second device 82.

In step 807, the first device 83-2 receiving the third message for requesting permission of a multi-administrator from the second device 82 may generate a nounce for authentication of the multi-administrator service and transmit the nonce to the second device 82. The nonce means a random variable, a temporary value, or the like used in an authentication procedure. A procedure of performing authentication between two devices using the nonce may use a known authentication technology.

Referring to FIG. 8B, in step 808, the second device 82 receiving the nonce may generate first authentication information required to be registered as an additional first administrator of the target IoT device 81 using the nonce and part or all of the onboarding payload obtained in step 801. In step 809, the second device 82 transmits the first authentication information to the first device 83-2, and in step 810, the first device 83-2 generates second authentication information using part or all of the onboarding payload obtained in step 800b and the nonce generated in step 807, and may perform authentication information verification by comparing whether the received first authentication information and the generated second authentication information are the same. The first device 83-2 determines that verification is successful when the first authentication information and the second authentication information are the same as a result of the comparison.

In step 811, the first device 83-2 receiving the third message for requesting permission of a multi-administrator from the second device 82 may consent/reject permitting the second device 82 as a multi-administrator (i.e., first administrator) for the target IoT device 81 according to the verification result in step 810. In this case, the consent/rejection may be performed through a consent/rejection input or the like of a user of the first device 83-2. In step 812, the first device 83-2 identifying the consent input may set/change an operation mode of the target IoT device 81 to the above-described registration mode (commissioning mode) so that registration of the target IoT device 81 (additional registration of a first administrator) is possible at the second device 82.

Thereafter, in step 813, the first device 83-2 may transmit, in response to the third message, a fourth message including information indicating whether to permit the second device 82 as a multi-administrator (first administrator) for the target IoT device 81 and (when permitted) an onboarding payload for the target IoT device 81 to the second device 82. In this case, the onboarding payload may be encrypted using the public key received in step 806. In step 814, the second device 82 receiving the fourth message identifies whether the permission is granted, and if permitted, performs registration (commissioning) for use of the target IoT device 81. The registration may include discovery and/or connection of the target IoT device 81 at the second device 82. The second device 82 decrypts the encrypted onboarding payload using the public key, and may use the decrypted onboarding payload in the registration mode of the target IoT device 81.

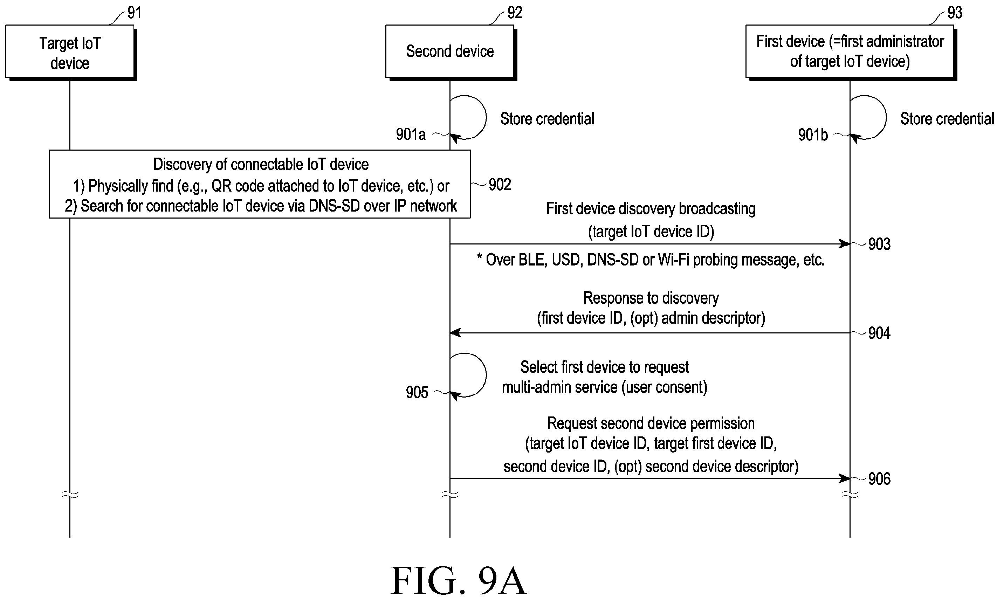

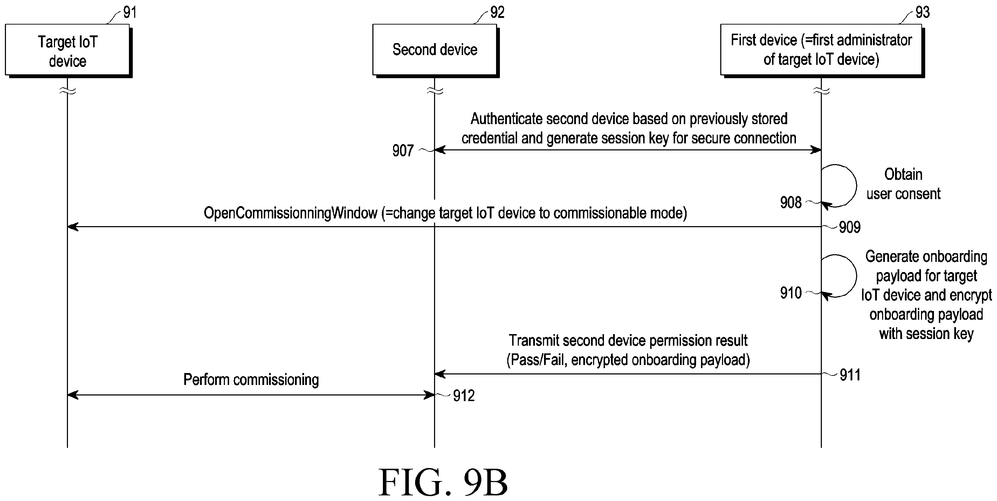

FIGS. 9A and 9B are views illustrating an example of a method for providing an IoT service using an encrypted onboarding payload while using a first device being a first administrator of an IoT device as a home hub in an IoT system supporting a multi-administrator service according to an embodiment of the disclosure.

In the examples of FIGS. 9A and 9B, the IoT system illustrates an IoT service environment including a target IoT device 91, a second device 92 intending to use the target IoT device 91 through a multi-administrator service, and a first device 93 for which ownership is registered (i.e., registered as a first administrator) for the target IoT device 91.

In the examples of FIGS. 9A and 9B, the target IoT device 91, the second device 92, and the first device 93 are each illustrated as one device for convenience, but a plurality of target IoT devices and a plurality of first and second devices may be present. Further, there may be one or more first devices registered as a first administrator for the target IoT device 91.

Referring to FIG. 9A, in steps 901a and 901b, it is assumed that the second device 92 and the first device 93 registered as a first administrator for the target IoT device 91 have pre-stored credential information for an authentication procedure required in a multi-administrator service. The credential information may use, e.g., a certificate, shared secret information, or the like.

In step 902, the second device 92 discovers a connectable target IoT device 91. In this case, the second device 92 may discover a connectable target IoT device 91, e.g., by DNS-SD through an IP network or using a QR code or the like physically attached to the target IoT device 91. In this case, the second device 92 may obtain information about the target IoT device 91. The information about the target IoT device 91 may include, e.g., an ID of the target IoT device 91, descriptor information, or the like.

In step 903, the second device 92 having found the target IoT device 91 to be used may broadcast a first message including an ID of the target IoT device 91 in a network to discover a first device being a first administrator of the target IoT device 91. The first message may be transmitted using, e.g., BLE which is a low power Bluetooth communication scheme, USD, DNS-SD which is a communication scheme for DNS-based service discovery, a Wi-Fi probing message, or the like. As an optional embodiment, it may also be possible to transmit the first message by a group cast or unicast scheme.

In step 904, the first device 93 receiving the first message including the ID of the target IoT device 91 may transmit a second message including its own device ID (or administrator ID) to the second device 92 in response thereto. As an optional embodiment, the second message may further include administrator descriptor information of the corresponding first device 93. The administrator descriptor information may be, e.g., information indicating that the corresponding first device 93 is a first administrator of the target IoT device 91. In step 905, the second device 92 receiving the second message from the first device 93 may select a first device 93 to request/apply for a multi-administrator service. In this case, the selection may be performed through a consent input or the like of a user of the second device 92.

In step 906, the second device 92 may transmit a third message including at least one of an ID of the target IoT device 91, an ID of the first device 93, and an ID of the corresponding second device 92 to the first device 93. The third message is a message requesting the first device 93 to permit the second device 92 as a multi-administrator for the target IoT device 91. As an optional embodiment, the third message may further include at least one of administrator descriptor information of the first device 93 and descriptor information of the second device 92.

Referring to FIG. 9B, in step 907, the first device 93 receiving the third message for requesting permission of a multi-administrator from the second device 92 may perform an authentication procedure for the second device 92 based on the credential information pre-stored in steps 900a and 900b for authentication of the multi-administrator service. Further, the first device 93 may generate a session key for a secure connection in an IoT service and transmit the session key to the second device 92. The session key may be used for encryption of an onboarding payload to be transmitted to the second device 92.

According to the authentication result in step 907, in step 908, the first device 93 may consent/reject permitting the second device 92 as a multi-administrator (i.e., first administrator) for the target IoT device 91. In this case, the consent/rejection may be performed through a consent/rejection input or the like of a user of the first device 93. Further, in step 909, the first device 93 identifying the consent input may set/change an operation mode of the target IoT device 91 to the above-described registration mode (commissioning mode) so that registration of the target IoT device 91 (additional registration of a first administrator) is possible at the second device 92.

Thereafter, in step 910, the first device 93 encrypts an onboarding payload that may be used in the registration mode of the target IoT device 91 using the session key, and in step 911, the first device 93 may transmit, in response to the third message, a fourth message including information indicating whether to permit the second device 92 as a multi-administrator (first administrator) for the target IoT device 91 and (when permitted) the encrypted onboarding payload for the target IoT device 81 to the second device 92. In step 912, the second device 92 receiving the fourth message identifies whether the permission is granted, and if permitted, performs registration (commissioning) for use of the target IoT device 91. The registration may include discovery and/or connection of the target IoT device 91 at the second device 92. The second device 92 decrypts the encrypted onboarding payload using the session key, and may use the decrypted onboarding payload in the registration mode of the target IoT device 81.

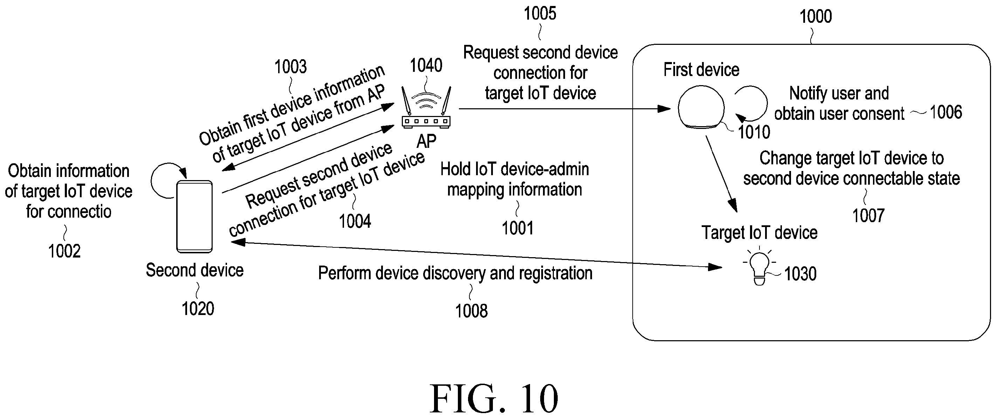

FIG. 10 is a view illustrating an example of a method for providing an AP-based IoT service in an IoT system supporting a multi-administrator service according to an embodiment of the disclosure.

The example of FIG. 10 is an embodiment in which information about a target IoT device 1030 may be provided to a second device 1020 through an AP 1040 of an IoT system, and the second device 1020 intending to use the target IoT device 1030 in an IoT system supporting a multi-administrator service receives permission to use the target IoT device 1030 from a first device 1010 through the AP 1040. In FIG. 10, the first device 1010 and the IoT device 1030 are subscribed to a network service 1000 providing an IoT service, and the second device 1020 may use the IoT device 1030 through a multi-administrator service.

Referring to FIG. 10, in step 1001, it is assumed that the AP 1040 is in a state connected to the first device 1010 being a first administrator of the target IoT device 1030. Further, it is assumed that the AP 1040 pre-stores mapping information of a first administrator ID mapped to an IoT device ID of the target IoT device 1030. The first administrator ID may use a device ID of a first device operating as a first administrator. Although not illustrated, the AP 1040 may store/register mapping information of at least one first administrator ID mapped to each IoT device of at least one IoT device (i.e., mapping information between an IoT device and a first administrator (device)). Hereinafter, in embodiments of the disclosure, an ID of a first device operating as a first administrator may be understood as a first administrator ID.

In step 1002, the second device 1020 may obtain information about the target IoT device 1030 (hereinafter, IoT device information) using, e.g., a scheme known in the Matter standard or a QR code attached to the IoT device 1030. The IoT device information may include an IoT device ID (identifier), descriptor information of the IoT device, or the like. Further, in step 1003, the second device 1020 may obtain information about the first device 1010 through signaling with the AP 1040 pre-storing information about the first device 1010 being a first administrator of the target IoT device 1030. The information about the first device 1010 may include an ID of the first device 1010, administrator descriptor information, or the like.

In step 1004, the second device 1020 having obtained the information about the first device 1010 may transmit a message for requesting connection to the IoT device 1030 to the AP 1040. The message for requesting the connection may include, e.g., at least one of an ID of the target IoT device 1030, an ID of the first device 1010, an ID of the second device 1020, and descriptor information.

In step 1005, the AP 1040 receiving the message for requesting the connection may transmit the message for requesting the connection or information notifying the connection request to the first device 1010. In step 1006, the first device 1010 receiving the message for requesting the connection or information notifying the connection request may output an alarm message (e.g., a text, sound, or video message) or the like notifying a user of the first device 1010 that there is a connection request for the target IoT device 1030 from the second device 1020, and may obtain a consent/rejection input of the user of the first device 1010 in response to the output.

As an optional embodiment, although not illustrated, the first device 1010 may transmit a message indicating consent/rejection of the connection request for the IoT device 1030 to the second device 1020 in response to the connection request. As an optional embodiment, although not illustrated, in case of consent to the connection request, the first device 1010 may provide an onboarding payload, which is information required for the second device 1020 to be registered as an additional first administrator of the IoT device 1030 in a commissioning mode (i.e., registration mode), to the second device 1020 in response to the connection request.

When the first device 1010 obtains a consent input of the user in step 1006, in step 1007, the first device 1010 may set/change an operation mode of the IoT device 1030 to the registration mode so that registration of the IoT device 1030 (additional registration of a first administrator) is possible at the second device 1020.

Thereafter, in step 1008, the second device 1020 may perform registration (commissioning) for the target IoT device 1030 changed to the registration mode to be additionally registered as a first administrator of the target IoT device 1030. In the disclosure, the registration may include discovery and/or connection of the target IoT device 1030 at the second device 1020. As an optional embodiment, the onboarding payload may be used when additionally registering as the first administrator.

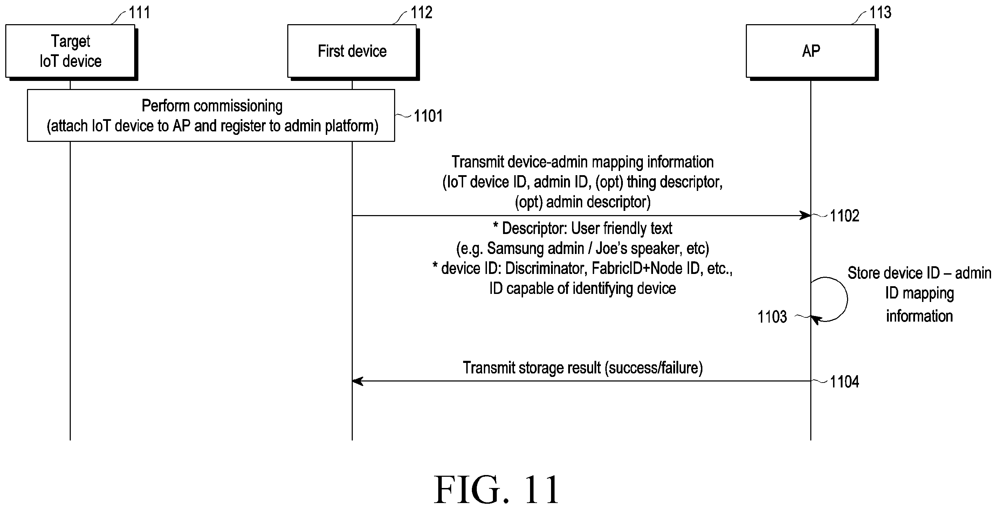

Through each of or a combination of two or more of the embodiments of FIGS. 11 to 17B to be described below, a second device transmits a request message requesting at least one of information about a first device being a first administrator for an IoT device connectable in an IoT system and information about the connectable IoT device to an AP, and may receive, in response to the request message, a response message including at least one of the information about the first device and the information about the connectable IoT device from the AP.

FIG. 11 is a view illustrating an example of a method for storing/registering mapping information between an IoT device and a first administrator (device) in an AP in an IoT system supporting a multi-administrator service according to an embodiment of the disclosure.

In the example of FIG. 11, the IoT system illustrates an IoT service environment including a target IoT device 111 and an AP 113 registering, storing, and managing information about a first device being a first administrator (i.e., having ownership) for the target IoT device 111. In the example of FIG. 10, the target IoT device 111 and the first device 112 are each illustrated as one device for convenience of description, but a plurality of target IoT devices and a plurality of first devices may be present.

Referring to FIG. 11, in step 1101, the first device 112 performs registration (commissioning) for use of the target IoT device 111. The registration may include discovery and/or connection of the target IoT device 111 at the first device 112. Through the registration, the first device 112 may become a first administrator of the target IoT device 111. Further, the first device 112 may attach (or connect) the target IoT device 111 to the AP 113 and register the target IoT device 111 with an administrator platform of the first device 112 in performing the registration.

In step 1102, the first device 112 may transmit mapping information between the target IoT device 111 and the first device 112 being the first administrator to the AP 113. The mapping information includes, e.g., mapping information between an ID of the target IoT device 111 and an ID of the first device 112 (i.e., admin ID). As an optional embodiment, the mapping information may further include at least one of thing descriptor information of the target IoT device 111 and administrator descriptor information of the first device 112. The descriptor information may be, e.g., composed of user friendly text, and as an example, when the first device 112 is a smart speaker in an IoT system and a registered alias of a first administrator is Joe, a description such as "Joe's speaker" may be provided as the administrator descriptor information. Further, a device ID such as the ID of the target IoT device 111 and the ID of the first device 112 may use various combinations of, e.g., a discriminator, a fabric ID for identifying an IoT service, a node ID, or the like.

In step 1103, the AP 113 receiving the mapping information from the first device 112 may register and store the mapping information between the target IoT device 111 and the first device 112 being the first administrator. Further, in step 1104, the AP 113 may transmit information indicating success or failure of registration and storage of the mapping information to the first device 112 as a response. As an optional embodiment, when the first device 112 includes a function of the AP 113, the operations of steps 1102 to 1104 may be performed as internal operations of the first device 112.

Further, as an optional embodiment, the registration and storage of the mapping information in the AP 113 may be performed periodically or aperiodically. Further, when at least one of an IoT device and a first device (or related information of an IoT device and a first device) is added, modified, or deleted in an IoT system, the mapping information stored in the AP 113 may be updated.

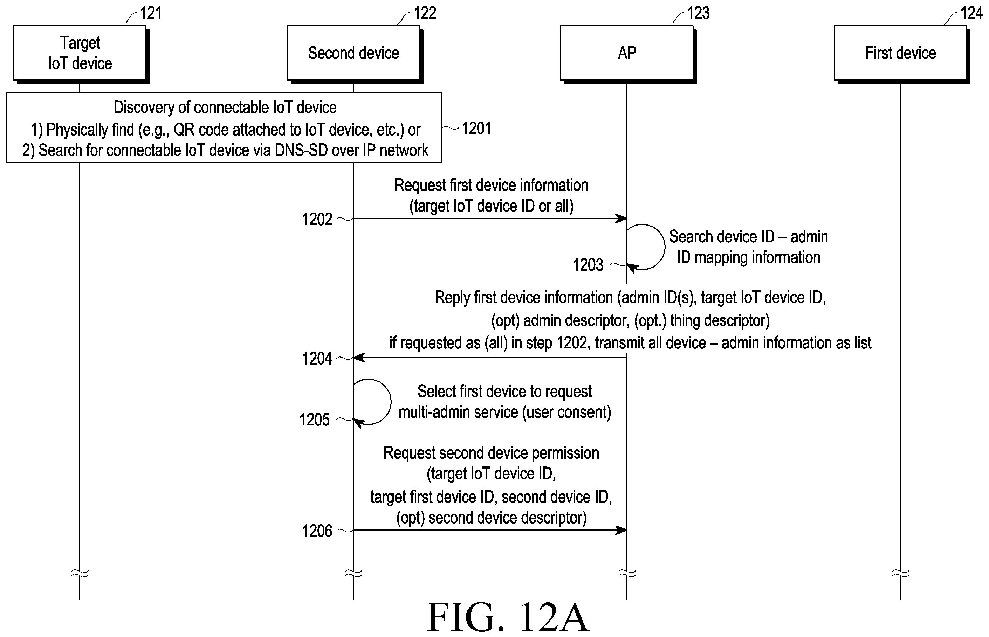

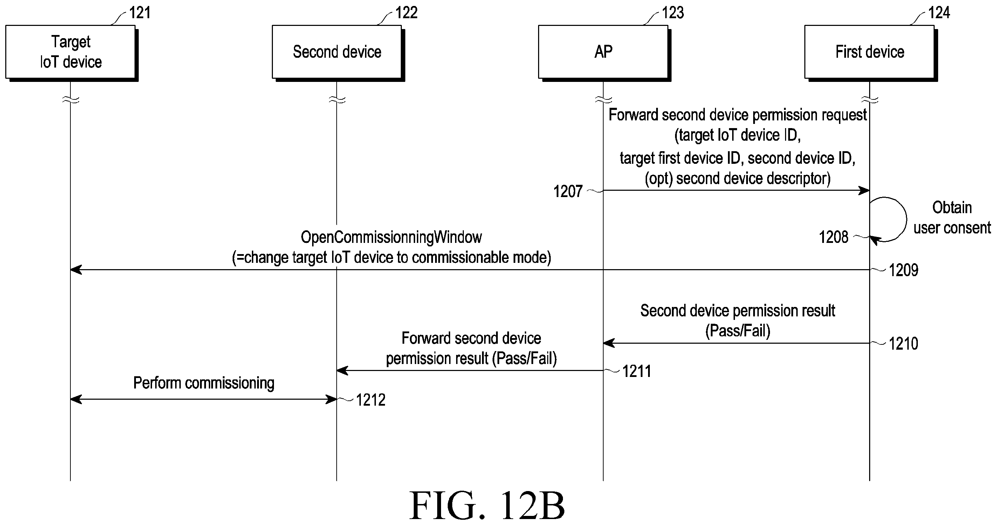

FIGS. 12A and 12B are views illustrating an example of a method for providing an IoT service using an AP in an IoT system supporting a multi-administrator service according to an embodiment of the disclosure. In the present embodiment, it is assumed that the AP 123 has pre-stored mapping information between an IoT device and a first administrator (device) according to the method of FIG. 11.

In the examples of FIGS. 12A and 12B, the IoT system illustrates an IoT service environment including a target IoT device 121, a second device 122 intending to use the target IoT device 121 through a multi-administrator service, an AP 123 storing/managing the above-described mapping information, and a first device 124 for which ownership is registered (i.e., registered as a first administrator) for the target IoT device 121. In the examples of FIGS. 12A and 12B, the target IoT device 121, the second device 123, and the first device 124 are each illustrated as one device for convenience, but a plurality of target IoT devices and a plurality of first and second devices may be present. Further, there may be one or more first devices registered as a first administrator for the target IoT device 121.

Referring to FIG. 12A, in step 1201, the second device 121 discovers a connectable target IoT device 122. In this case, the second device 122 may discover a connectable target IoT device 121, e.g., by DNS-SD through an IP network or using a QR code or the like physically attached to the target IoT device 121. In this case, the second device 122 may obtain information about the target IoT device 121. The information about the target IoT device 121 may include, e.g., an ID of the target IoT device 121, descriptor information, or the like.

In step 1202, the second device 122 having found the target IoT device 121 to be used may transmit a first request message requesting information about the first device 124 to the AP 123 to discover the first device 124 being a first administrator of the target IoT device 121. The first request message may include an ID of the target IoT device 121. As an optional embodiment, the first request message may include information requesting information about first administrators (first devices) for all (or a predetermined group based on type/function/frequency of use/time of use of target IoT devices) target IoT devices registered in the mapping information of the AP 123. As an optional embodiment, the first request message may further include descriptor information of the target IoT device 121.

In step 1203, the AP 123 receiving the first request message searches for information about the first device 124 mapped to the ID of the target IoT device 121 from the stored mapping information, and in step 1204, the AP 123 may transmit a first response message including the searched information about the first device 124 to the second device 122. As an optional embodiment, the first response message may include at least one of an ID of the target IoT device 121, an ID of the first device 124, descriptor information of the target IoT device 121, and administrator descriptor information of the first device 124. As an optional embodiment, when the first request message in step 1202 includes information requesting information about first administrators (first devices) for all (or a predetermined group of) target IoT devices, the first response message may include information about first administrators (first devices) for all (or the requested group of) target IoT devices.

In step 1205, the second device 122 receiving the first response message from the AP 123 may select a first device 124 to request/apply for a multi-administrator service from among at least one first device identified in the first response message. In this case, the selection may be performed through a consent input or the like of a user of the second device 122. In the present embodiment, it is assumed that the first device 124 is selected as a target for request/application of a multi-administrator service.

In step 1206, the second device 122 may transmit a second request message including at least one of an ID of the target IoT device 121, an ID of the selected first device 124, and an ID of the corresponding second device 122 to the AP 123. The second request message is a message requesting the first device 124 to permit the second device 122 as a multi-administrator for the target IoT device 121. As an optional embodiment, the second request message may further include at least one of administrator descriptor information of the first device 124 and descriptor information of the second device 122.

In step 1207, the second request message (or information included in the second request message) is transmitted to the first device 124 through the AP 123. In step 1208, the first device 124 receiving the second request message (or information included in the second request message) may consent/reject permitting the second device 122 as a multi-administrator (i.e., first administrator) for the target IoT device 121. In this case, the consent/rejection may be performed through a consent/rejection input or the like of a user of the first device 124.

Thereafter, in step 1209, the first device 124 (when permitted in step 1208) may set/change an operation mode of the target IoT device 121 to a registration mode (commissioning mode) so that registration (commissioning) of the target IoT device 121 (i.e., additional registration of a first administrator) is possible at the second device 122. In steps 1210 and 1211, the first device 124 may transmit, in response to the second request message, a second response message including information indicating whether to permit the second device 122 as a multi-administrator (first administrator) for the target IoT device 121 to the second device 122 through the AP 123. Further, in step 1212, the second device 122 receiving the second response message identifies whether the permission is granted, and if permitted, performs registration (commissioning) for use of the target IoT device 121. The registration may include discovery and/or connection of the target IoT device 121 at the second device 122.

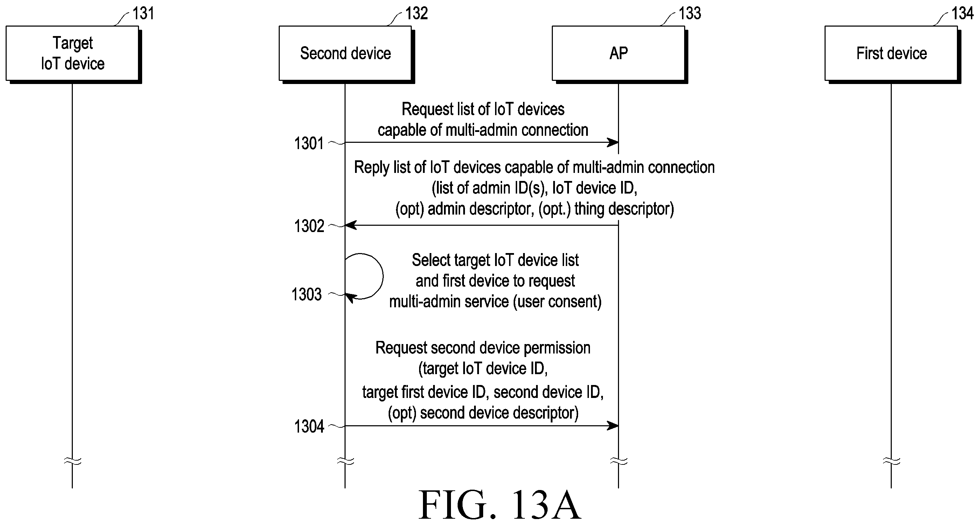

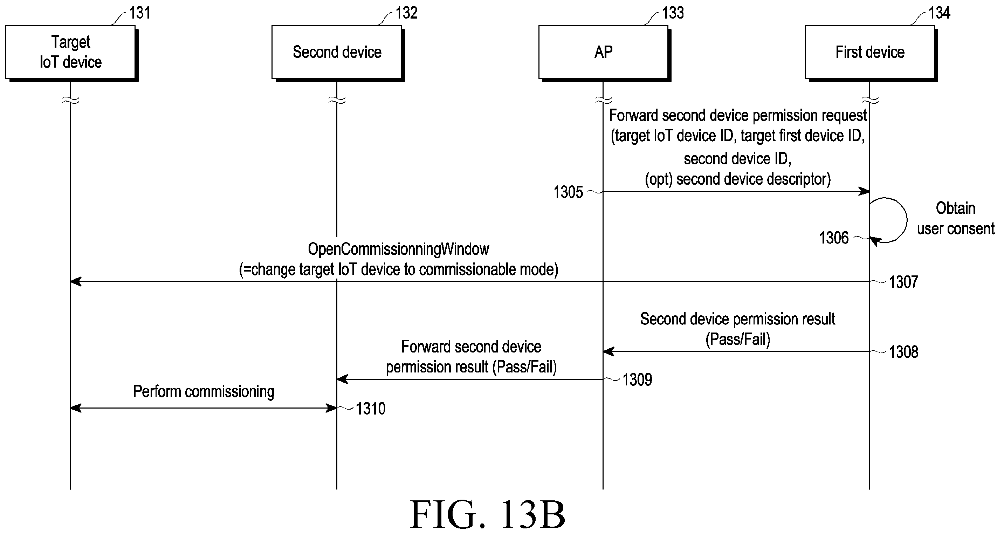

FIGS. 13A and 13B are views illustrating an example of a method for providing an IoT service using an AP in an IoT system supporting a multi-administrator service according to an embodiment of the disclosure. In the present embodiment, it is assumed that the AP has pre-stored mapping information between an IoT device and a first administrator (device) according to the method of FIG. 11. The embodiment of FIGS. 13A and 13B, compared to the embodiment of FIGS. 12A and 12B, does not require an operation in which the second device directly discovers a connectable target IoT device as in step 1201 of FIG. 12A, and the second device may obtain information about a connectable target IoT device from an AP.

In the examples of FIGS. 13A and 13B, the IoT system illustrates an IoT service environment including a target IoT device 131, a second device 132 intending to use the target IoT device 131 through a multi-administrator service, an AP 133 pre-storing/managing the above-described mapping information, and a first device 134 for which ownership is registered (i.e., registered as a first administrator) for the target IoT device 131. In the examples of FIGS. 13A and 13B, the target IoT device 131, the second device 133, and the first device 134 are each illustrated as one device for convenience, but a plurality of target IoT devices and a plurality of first and second devices may be present. Further, there may be one or more first devices registered as a first administrator for the target IoT device 131.

Referring to FIG. 13A, in step 1301, in order to identify a list of at least one IoT device connectable through a multi-administrator service (hereinafter, IoT device list information), the second device 132 may transmit a first request message requesting the IoT device list information to the AP 133. The above-described mapping information may represent a mapping relationship between at least one first administrator ID mapped to each IoT device of at least one IoT device in a list form. The IoT device list information may be the same as the mapping information or may represent a mapping relationship between at least one IoT device usable by the second device 132 among IoT devices registered in the mapping information and at least one first administrator (first device).

In step 1302, the AP 133 receiving the first request message may transmit a first response message including the IoT device list information to the second device 132. In the present embodiment, the IoT device list information may include information about the first device 134. As an optional embodiment, the first response message may include at least one of a list of ID(s) of IoT device(s), a list of ID(s) of first device(s) of the IoT device(s), descriptor information of the IoT device(s), and administrator descriptor information of the first device(s).

In step 1303, the second device 132 receiving the first response message from the AP 133 may select a first device 134 to request/apply for a multi-administrator service for the target IoT device 131 from among a list of IoT device(s) and first device(s) identified in the first response message. In this case, the selection may be performed through a consent input or the like of a user of the second device 132. In the present embodiment, it is assumed that the first device 134 is selected as a target for request/application of a multi-administrator service.

In step 1304, the second device 132 may transmit a second request message including at least one of an ID of the selected target IoT device 131, an ID of the selected first device 134, and an ID of the corresponding second device 132 to the AP 123. As an optional embodiment, when a plurality of target IoT devices are selected by the second device 132, an ID of a target IoT device and an ID of the corresponding first device may be included in the second request message in a list form. The second request message is a message requesting the first device 134 to permit the second device 132 as a multi-administrator for the target IoT device 131 through the AP 133. As an optional embodiment, the second request message may further include at least one of administrator descriptor information of the first device 134 and descriptor information of the second device 132.

In step 1305, the second request message (or information included in the second request message) is transmitted from the AP 133 to the first device 134. In step 1306, the first device 134 receiving the second request message (or information included in the second request message) may consent/reject permitting the second device 132 as a multi-administrator (i.e., first administrator) for the target IoT device 131. In this case, the consent/rejection may be performed through a consent/rejection input or the like of a user of the first device 134.

Thereafter, in step 1307, the first device 134 (when permitted in step 1206) may set/change an operation mode of the target IoT device 131 to a registration mode (commissioning mode) so that registration (commissioning) of the target IoT device 131 (i.e., additional registration of a first administrator) is possible at the second device 132. In steps 1308 and 1309, the first device 134 may transmit, in response to the second request message, a second response message including information indicating whether to permit the second device 132 as a multi-administrator (first administrator) for the target IoT device 131 to the second device 132 through the AP 133. Further, in step 1310, the second device 132 receiving the second response message identifies whether the permission is granted, and if permitted, performs registration (commissioning) for use of the target IoT device 131. The registration may include discovery and/or connection of the target IoT device 131 at the second device 132.

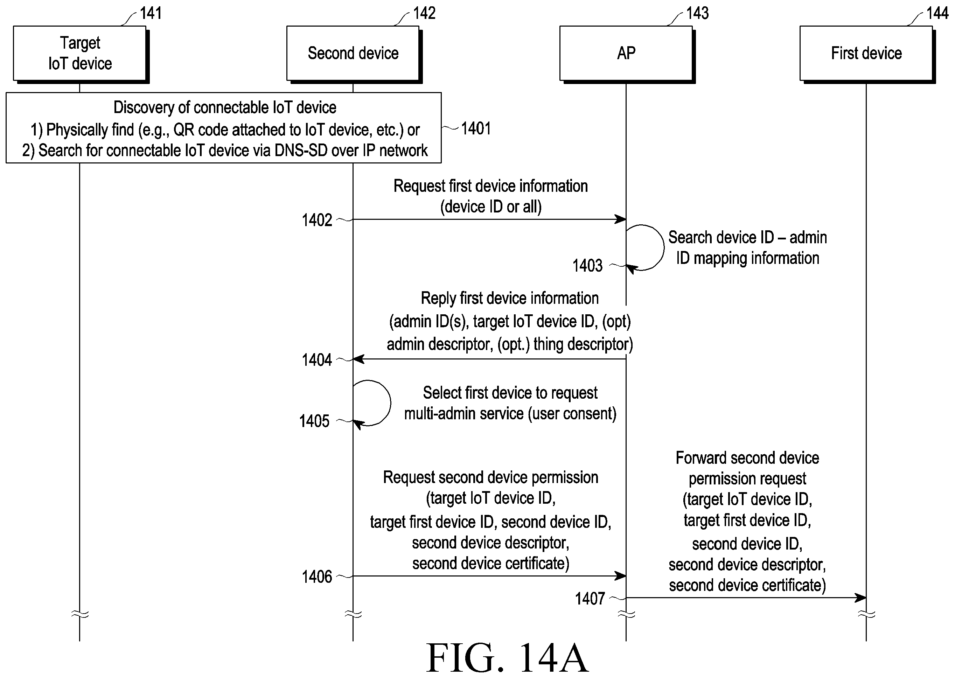

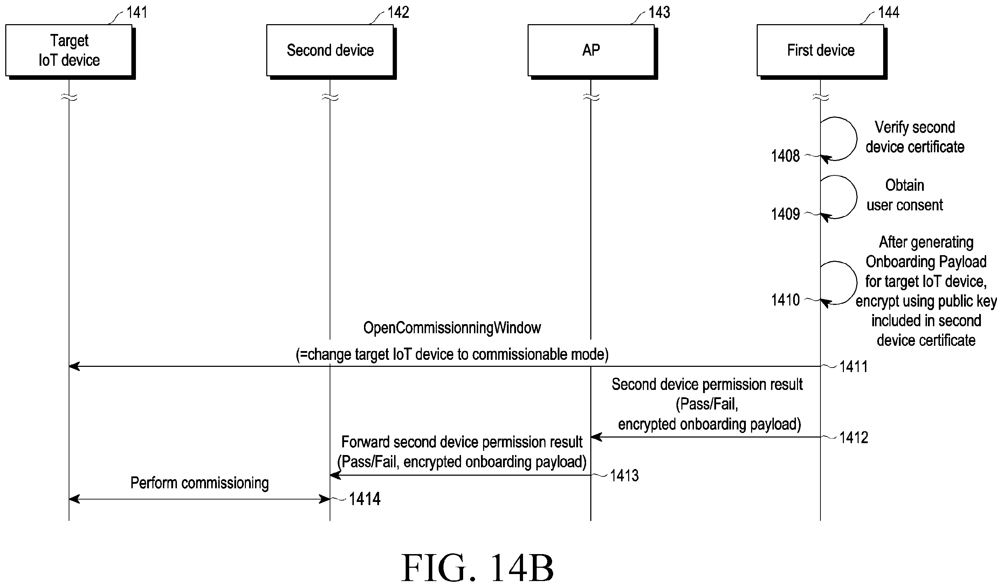

FIGS. 14A and 14B are views illustrating an example of a method for providing an IoT service using an encrypted onboarding payload while using an AP in an IoT system supporting a multi-administrator service according to an embodiment of the disclosure. In the present embodiment, it is assumed that the AP has pre-stored mapping information between an IoT device and a first administrator (device) according to the above-described method of FIG. 11, and the first device has a root certificate in advance for verification of a certificate used for encryption of the onboarding payload.

In the examples of FIGS. 14A and 14B, the IoT system illustrates an IoT service environment including a target IoT device 141, a second device 142 intending to use the target IoT device 141 through a multi-administrator service, an AP 143 storing/managing the above-described mapping information, and a first device 144 for which ownership is registered (i.e., registered as a first administrator) for the target IoT device 141. In the examples of FIGS. 14A and 14B, the target IoT device 141, the second device 143, and the first device 144 are each illustrated as one device for convenience, but a plurality of target IoT devices and a plurality of first and second devices may be present. Further, there may be one or more first devices registered as a first administrator for the target IoT device 141.

Referring to FIG. 14A, in step 1401, the second device 141 discovers a connectable target IoT device 142. In this case, the second device 142 may discover a connectable target IoT device 141, e.g., by DNS-SD through an IP network or using a QR code or the like physically attached to the target IoT device 141. In this case, the second device 142 may obtain information about the target IoT device 141. The information about the target IoT device 141 may include, e.g., an ID of the target IoT device 141, descriptor information, or the like.

In step 1402, the second device 142 having found the target IoT device 141 to be used may transmit a first request message requesting information about the first device 144 to the AP 143 to discover the first device 144 being a first administrator of the target IoT device 141. The first request message may include an ID of the target IoT device 141. As an optional embodiment, the first request message may include information requesting information about first administrators (first devices) for all (or a predetermined group based on type/function/frequency of use/time of use of target IoT devices) target IoT devices registered in the mapping information of the AP 143. As an optional embodiment, the first request message may further include descriptor information of the target IoT device 141.

In step 1403, the AP 143 receiving the first request message searches for information about the first device 144 mapped to the ID of the target IoT device 141 from the stored mapping information, and in step 1404, the AP 123 may transmit a first response message including the searched information about the first device 144 to the second device 142. As an optional embodiment, the first response message may include at least one of an ID of the target IoT device 141, an ID of the first device 144, descriptor information of the target IoT device 141, and administrator descriptor information of the first device 144. As an optional embodiment, when the first request message in step 1402 includes information requesting information about first administrators (first devices) for all (or a predetermined group of) target IoT devices, the first response message may include information about first administrators (first devices) for all (or the requested group of) target IoT devices.

In step 1405, the second device 142 receiving the first response message from the AP 143 may select a first device 144 to request/apply for a multi-administrator service from among at least one first device identified in the first response message. In this case, the selection may be performed through a consent input or the like of a user of the second device 142. In the present embodiment, it is assumed that the first device 144 is selected as a target for request/application of a multi-administrator service.

In step 1406, the second device 142 may transmit a second request message including at least one of an ID of the target IoT device 141, an ID of the selected first device 144, an ID of the corresponding second device 142, and a certificate of the second device 142 to the AP 143. The certificate may include a public key for encryption of an onboarding payload. The second request message is a message requesting the first device 144 to permit the second device 142 as a multi-administrator for the target IoT device 141. As an optional embodiment, the second request message may further include at least one of administrator descriptor information of the first device 144 and descriptor information of the second device 142.

In step 1407, the second request message (or information included in the second request message) is transmitted to the first device 124 through the AP 143. In step 1408, the first device 144 receiving the second request message (or information included in the second request message) may verify the certificate included in the second request message using the root certificate held in advance. In step 1409, the first device 144 may consent/reject permitting the second device 142 as a multi-administrator (i.e., first administrator) for the target IoT device 141. In this case, the consent/rejection may be performed through a consent/rejection input or the like of a user of the first device 144.

In step 1410, the first device 144 (when permitted in step 1409) generates an onboarding payload, which is information required to register the second device 142 as an additional first administrator of the target IoT device 141, and may encrypt the onboarding payload using the public key included in the verified certificate.

Thereafter, in step 1411, the first device 144 (when permitted in step 1409) may set/change an operation mode of the target IoT device 141 to a registration mode (commissioning mode) so that registration (commissioning) of the target IoT device 141 (i.e., additional registration of a first administrator) is possible at the second device 142.

In steps 1412 and 1413, the first device 124 may transmit, in response to the second request message, a second response message including information indicating whether to permit the second device 142 as a multi-administrator (first administrator) for the target IoT device 141 and (when permitted) the encrypted onboarding payload to the second device 142 through the AP 143. Further, in step 1414, the second device 142 receiving the second response message identifies whether the permission is granted, and if permitted, performs registration (commissioning) for use of the target IoT device 141. The registration may include discovery and/or connection of the target IoT device 141 at the second device 142. The second device 142 decrypts the encrypted onboarding payload using the public key, and may use the decrypted onboarding payload in the registration mode of the target IoT device 141.

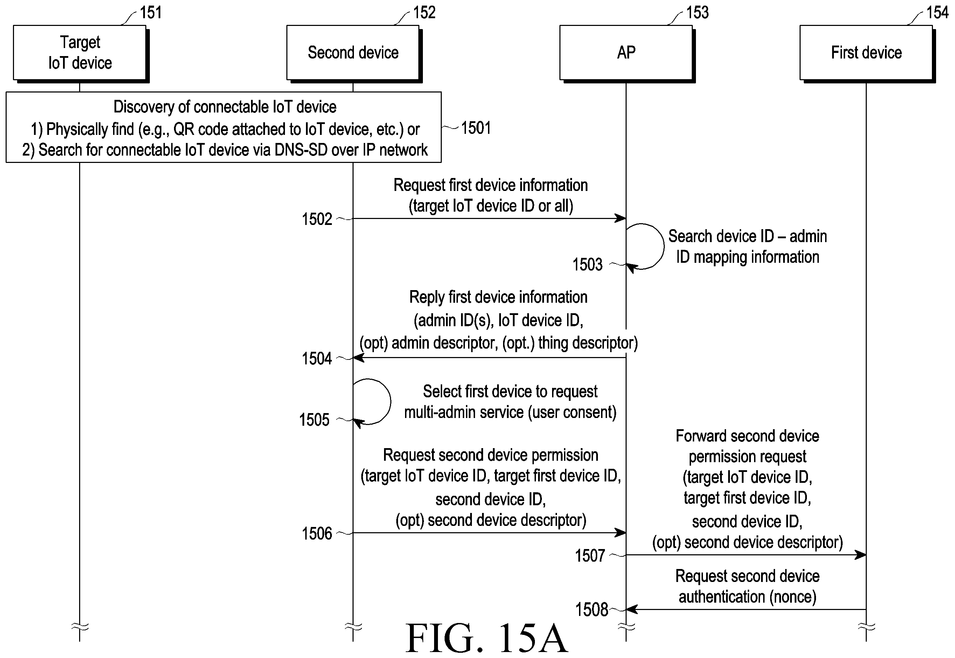

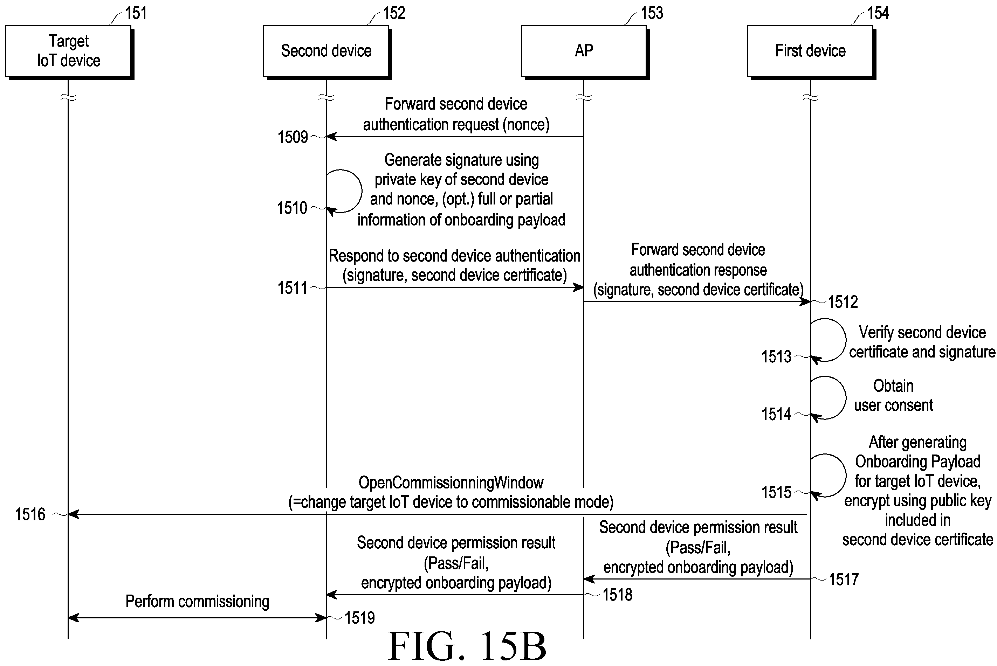

FIGS. 15A and 15B are views illustrating an example of a method for providing an IoT service using an encrypted onboarding payload while using an AP in an IoT system supporting a multi-administrator service according to an embodiment of the disclosure. In the present embodiment, it is assumed that the AP has pre-stored mapping information between an IoT device and a first administrator (device) according to the above-described method of FIG. 11, and the first device has a root certificate in advance for verification of a certificate used for encryption of the onboarding payload.

The operations in steps 1501 to 1505 of FIG. 15A are the same as the operations in steps 1401 to 1405 of FIG. 14A, and thus detailed description thereof is omitted.

In step 1501, the second device 152 may obtain part or all of an onboarding payload for the target IoT device 151 through a discriminator, a passcode, a QR code, a PIN, or the like of the target IoT device 151.

Referring to FIG. 15A, in step 1506, the second device 152 may transmit a second request message including at least one of an ID of the target IoT device 151, an ID of the selected first device 154, and an ID of the second device 152 to the AP 143. The second request message is a message requesting the first device 154 to permit the second device 152 as a multi-administrator for the target IoT device 151. As an optional embodiment, the second request message may further include at least one of administrator descriptor information of the first device 154 and descriptor information of the second device 152.

In step 1507, the second request message (or information included in the second request message) is transmitted to the first device 154 through the AP 153. In steps 1508 and 1509, the first device 154 receiving the second request message (or information included in the second request message) generates a nonce for authentication (i.e., authentication of the second device 154) of the multi-administrator service and transmits an authentication request message including the nounce to the second device 82 through the AP 153. The nonce means a random variable, a temporary value, or the like used in an authentication procedure. A procedure of performing authentication between two devices using the nonce may use a known authentication technology.

In step 1510, the second device 152 may generate a (digital) signature used in an authentication procedure using at least one of a private key of the second device 152, the received nonce, and part or all of the onboarding payload obtained in step 1501. In steps 1511 and 1512, the second device 152 transmits, in response to the authentication request message, an authentication response message including the (digital) signature and a certificate of the second device 152 to the first device 154 through the AP 153.

In step 1513, the first device 151 may verify the certificate and the digital signature included in the second request message using the root certificate and the public key held in advance. A digital signature using an asymmetric key may be performed in, e.g., two ways. A first way is a way of encrypting a digital signature using a public key and decrypting the encrypted digital signature using a private key. A second way is a way of encrypting a digital signature using a private key and decrypting the encrypted digital signature using a public key.

In the present embodiment, when the second device 152 transmits an encrypted digital signature encrypted using the private key to the first device 154 through the AP 153, the first device 154 may verify (identify) whether the digital signature is transmitted by the second device 152 by decrypting the encrypted digital signature using the public key. In the present embodiment, the digital signature of the second way is illustrated, but it may also be possible to use the digital signature of the first way.

In step 1514, the first device 154 may consent/reject permitting the second device 152 as a multi-administrator (i.e., first administrator) for the target IoT device 151. In this case, the consent/rejection may be performed through a consent/rejection input or the like of a user of the first device 154.

The operations in steps 1515 to 1519 in which the first device 154 generates an encrypted onboarding payload, sets a registration mode for the target IoT device 151, transmits a second response message including information indicating whether to permit as a multi-administrator (first administrator) and the encrypted onboarding payload to the second device 152, and the second device 142 performs registration (commissioning) for the target IoT device 151 are the same as the operations in steps 1410 to 1414 of FIG. 14B, and thus detailed description thereof is omitted.

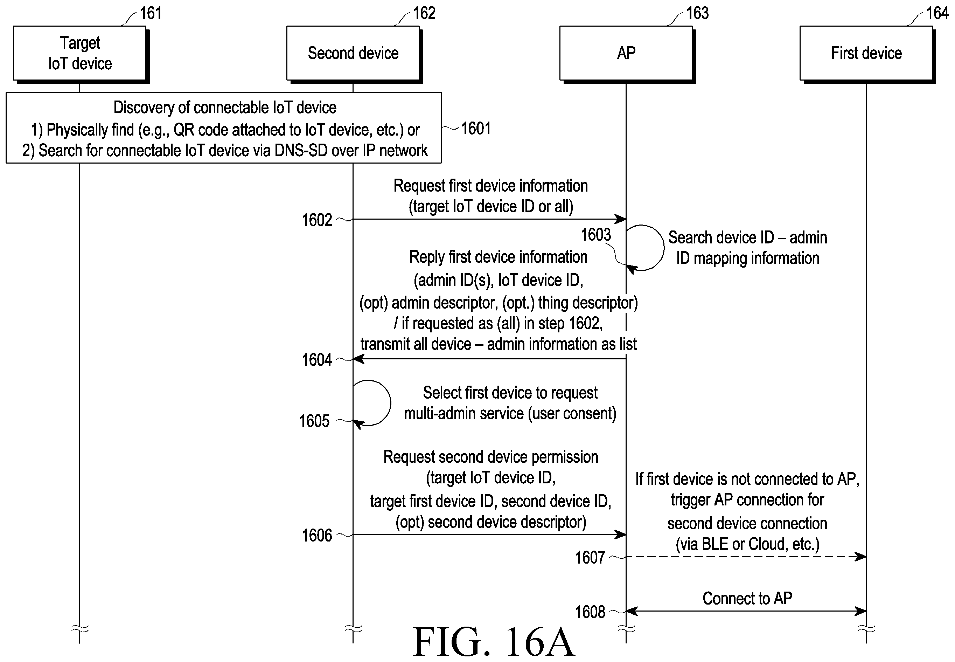

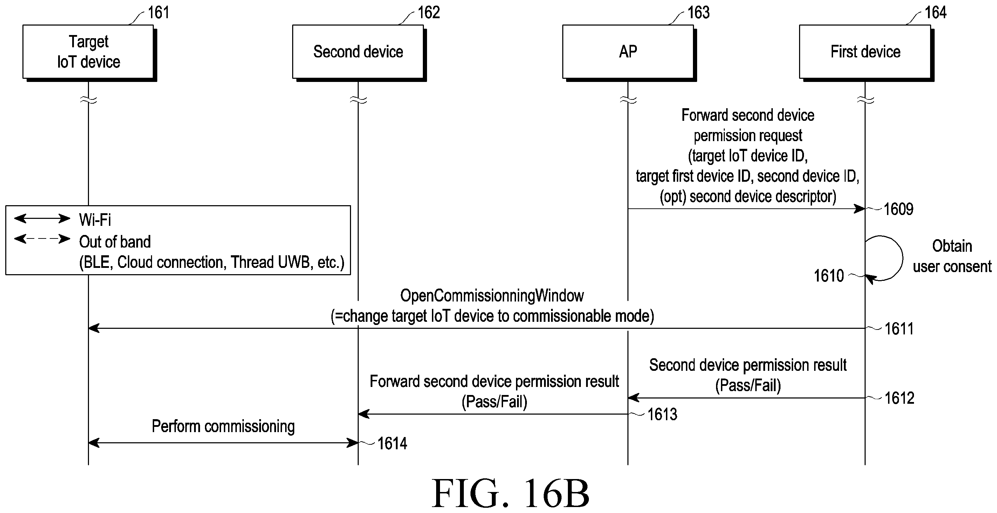

FIGS. 16A and 16B are views illustrating an example of a method for providing an IoT service when a first device being a first administrator is in a disconnected state from an AP while using the AP in an IoT system supporting a multi-administrator service according to an embodiment of the disclosure. In the present embodiment, it is assumed that the AP has pre-stored mapping information between an IoT device and a first administrator (device) according to the above-described method of FIG. 11.

The operations in steps 1601 to 1605 of FIG. 16A are the same as the operations in steps 1201 to 1205 of FIG. 12A, and thus detailed description thereof is omitted.

Referring to FIG. 16A, in step 1606, the second device 162 may transmit a second request message including at least one of an ID of the target IoT device 161, an ID of the selected first device 154, and an ID of the second device 152 to the AP 163. The second request message is a message requesting the first device 164 to permit the second device 162 as a multi-administrator for the target IoT device 161. As an optional embodiment, the second request message may further include at least one of administrator descriptor information of the first device 164 and descriptor information of the second device 152.

In step 1607, when the AP 163 identifies that the first device 164 is not connected to the AP 163, the AP 163 triggers a connection procedure so that the first device 164 being the first administrator is connected to the AP 163 through, e.g., BLE or a cloud network. In step 1608, the first device 164 is connected to the AP 163 through the connection procedure.

The operations in steps 1609 to 1614 in which the AP 163 transmits the second request message to the first device 164, the first device 164 receives a consent/rejection input of the user, (in case of consent) the first device 164 sets a registration mode for the target IoT device 161, transmits a second response message including information indicating whether to permit as a multi-administrator (first administrator) to the second device 162, and the second device 162 performs registration (commissioning) for the target IoT device 161 are the same as the operations in steps 1207 to 1212 of FIG. 12B, and thus detailed description thereof is omitted.

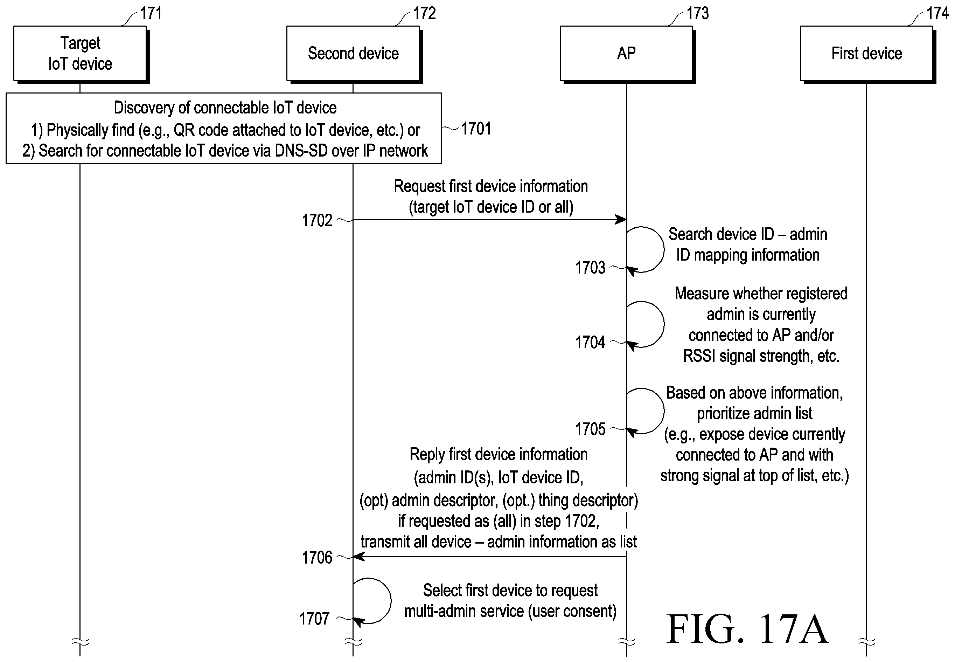

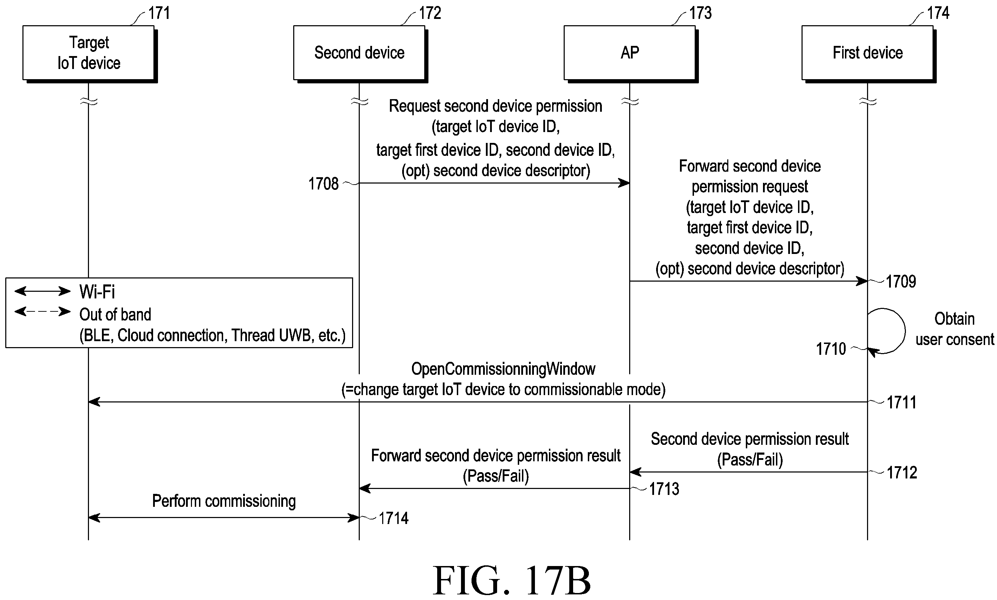

FIGS. 17A and 17B are views illustrating an example of a method for providing an IoT service by prioritizing a list of first devices being first administrators while using an AP in an IoT system supporting a multi-administrator service according to an embodiment of the disclosure. In the present embodiment, it is assumed that the AP 123 has pre-stored mapping information between an IoT device and a first administrator (device) according to the method of FIG. 11.

In the examples of FIGS. 17A and 17B, the IoT system illustrates an IoT service environment including a target IoT device 171, a second device 172 intending to use the target IoT device 171 through a multi-administrator service, an AP 173 storing the above-described mapping information, and a first device 174 for which ownership is registered (i.e., registered as a first administrator) for the target IoT device 171. In the examples of FIGS. 17A and 17B, the target IoT device 171, the second device 173, and the first device 174 are each illustrated as one device for convenience, but a plurality of target IoT devices and a plurality of first and second devices may be present. Further, there may be one or more first devices registered as a first administrator for the target IoT device 171.

In steps 1701 to 1703 of FIG. 17A, the operations in which the second device 171 discovers a connectable target IoT device 172, the second device 172 having found the target IoT device 121 transmits a first request message requesting information about the first device 124 to the AP 173, and the AP 123 receiving the first request message searches for information about the first device 124 mapped to an ID of the target IoT device 171 from pre-stored mapping information may be performed in the same manner as the operations in steps 1201 to 1203 of FIG. 12A.

Thereafter, in step 1704 of FIG. 17A, the AP 173 may identify, based on the mapping information, whether at least one first device registered as a first administrator of the target IoT device 121 is connected to an AP and/or a signal strength (e.g., received signal strength indicator (RSSI)) of the at least one first device. In step 1705, the AP 173 sorts a list of at least one first device registered as a first administrator of the target IoT device 121 according to a priority based on at least one of the identified AP connection status and signal strength. For example, the list may be sorted in an order of greater signal strength among first device(s) connected to an AP.

In step 1706, the AP 173 may transmit a first response message including information about the first device 124 selected according to the priority to the second device 122. As an optional embodiment, the first response message may include at least one of an ID of the target IoT device 121, an ID of the first device 124, descriptor information of the target IoT device 121, and administrator descriptor information of the first device 124. As an optional embodiment, when the first request message in step 1202 includes information requesting information about first administrators (first devices) for all (or a predetermined group of) target IoT devices, the first response message includes list information of first administrators (first devices) for all (or the requested group of) target IoT devices. The list information is the list information sorted according to the priority in step 1705.

Thereafter, the operations in steps 1707 to 1714 of FIGS. 17A and 17B may be performed in the same manner as the operations in steps 1205 to 1212 of FIGS. 12A and 12B described above.

According to the above-described embodiments of the disclosure, information about first device(s) being a first administrator of a target IoT device may be easily/safely provided to a second device intending to use the target IoT device in an IoT system supporting a multi-administrator service. Further, an onboarding payload required when the second device performs registration (commissioning) of a target IoT device may be easily/safely provided by a first device being a first administrator (through an AP) to the second device. Further, for use of a target IoT device at a second device, information about a first device may be easily/safely provided to the second device according to a request/application from the second device without requiring an operation of the first device in advance.

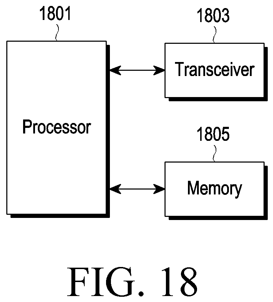

FIG. 18 is a view illustrating a configuration example of a device in a wireless communication system according to an embodiment of the disclosure.

The device of FIG. 18 may be one of a first device, a second device, and an AP described in the embodiments of FIGS. 4 to 17B described above. The device of FIG. 18 may include a processor 1801, a transceiver 1803, and memory 1805. The processor 1801, the transceiver 1803, and the memory 1805 of the corresponding device may operate according to the method described in the embodiments of FIGS. 4 to 17B. However, the components of the device are not limited to the above-described example. For example, the device may include more components or fewer components than the above-described components. The processor 1801, the transceiver 1803, and the memory 1805 may be implemented in the form of a single chip.

The transceiver 1803 is a collective term for a receiver and a transmitter of the device and may transmit/receive a signal with a counterpart device. The transmitted/received signals may include at least one of control information and data. Further, the transceiver 1803 may receive a signal and output the signal to the processor 1801, and may transmit a signal output from the processor 1801. Further, the transceiver 1803 of FIG. 18 may include a transmitter capable of transmitting a signal and a receiver capable of receiving a signal according to at least one of the communication schemes illustrated in the embodiments of FIGS. 4 to 17B or a known proximity communication scheme. Further, the transceiver 1803 may receive a signal and output the signal to the processor 1801, and may transmit a signal output from the processor 1801 to a counterpart device through a network. The memory 1805 may store a program and data required for operation of the device according to at least one of the embodiments of FIGS. 4 to 17B. Further, the memory 1805 may store control information or data included in a signal obtained by the device. The memory 1805 may include a storage medium, such as ROM, RAM, hard disk, CD-ROM, and DVD, or a combination of storage media.

Further, the processor 1801 may control a series of processes so that the device may operate according to at least one of the embodiments of FIGS. 4 to 17B. The processor 1801 may include at least one processor. The methods according to the embodiments descried in the specification or claims of the disclosure may be implemented in hardware, software, or a combination of hardware and software. When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included. The programs may be stored in attachable storage devices that may be accessed via a communication network, such as the Internet, Intranet, local area network (LAN), wide area network (WAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the disclosure have been described above, various changes may be made thereto without departing from the scope of the disclosure. Thus, the scope of the disclosure should not be limited to the above-described embodiments, and should rather be defined by the following claims and equivalents thereof.

## Claims

1. A method performed by a first device in an internet of things (IoT) system supporting a multi-administrator service, the method comprising:
receiving, by the first device, a first message including first information about a target IoT device from a second device in connection to use of the target IoT device for which the first device is registered as a first administrator;
transmitting, in response to reception of the first message, a second message including second information about the first device to the second device;
receiving a third message requesting permission for use of the target IoT device from the second device; and
transmitting, in response to reception of the third message, a fourth message including information indicating whether the use is permitted.

2. The method of claim 1, further comprising setting the target IoT device to a commissioning mode in which use of the target IoT device is enabled at the target IoT device in case that the request for use of the target IoT device is permitted.

3. The method of claim 1, further comprising:
performing an authentication procedure related to permission for use of the target IoT device with the second device, wherein the authentication procedure is performed using at least one of:
nounce information generated by the first device and provided to the first device;
part or all of an onboarding payload required for use of the target IoT device;
credential information pre-stored in the first device and the second device; and
a certificate of the second device including a public key for encryption of the onboarding payload.

4. The method of claim 1, wherein the fourth message further including an onboarding payload required for use of the target IoT device at the second device is transmitted in case that the request for use of the target IoT device is permitted.

5. The method of claim 4, wherein the onboarding payload is encrypted using one of a public key included in a certificate of the second device and a session key generated by the first device and is transmitted.

6. A first device in an internet of things (IoT) system supporting a multi-administrator service, the first device comprising:
a transceiver; and
a processor configured to: receive, through the transceiver, a first message including first information about a target IoT device from a second device in connection to use of the target IoT device for which the first device is registered as a first administrator;
transmit, through the transceiver, in response to reception of the first message, a second message including second information about the first device to the second device;
receive, through the transceiver, a third message requesting permission for use of the target IoT device from the second device; and
transmit, through the transceiver, in response to reception of the third message, a fourth message including information indicating whether the use is permitted.

7. The first device of claim 6, wherein the first device is adapted to operate according to the method of any one of claims 2 to 5.

8. A method performed by a second device in an internet of things (IoT) system supporting a multi-administrator service, the method comprising:
transmitting a first request message requesting at least one of first information about at least one first device which is a first administrator for at least one IoT device connectable in the IoT system and second information about the at least one connectable IoT device to an access point (AP) of the IoT system;
receiving, in response to the first request message, a first response message including at least one of the first information and the second information from the AP;
transmitting a second request message requesting permission for use of a target IoT device selected from among the at least one connectable IoT device to a first device, which is a first administrator of the target IoT device, through the AP; and
receiving, in response to transmission of the second request message, a second response message including information indicating whether the use is permitted from the first device through the AP.

9. The method of claim 8, wherein the first response message further includes mapping information between first identification information of each of a plurality of IoT devices and second identification information of a first administrator for each of the plurality of IoT devices in the IoT system, and the mapping information is pre-stored in the AP.

10. The method of claim 8, wherein the second request message further includes a certificate of the second device used for an authentication procedure related to permission for use of the target IoT device between the second device and the first device.

11. The method of claim 8, wherein the second response message further including an onboarding payload required for use of the target IoT device at the second device is received in case that the request for use of the target IoT device is permitted.

12. The method of claim 8, wherein the first information about the at least one first device is provided to the second device as list information sorted in an order of greater signal strength among first devices connected to the AP.

13. A second device in an internet of things (IoT) system supporting a multi-administrator service, the second device comprising:
a transceiver; and
a processor configured to: transmit, through the transceiver, a first request message requesting at least one of first information about at least one first device which is a first administrator for at least one IoT device connectable in the IoT system and second information about the at least one connectable IoT device to an access point (AP) of the IoT system;
receive, through the transceiver, in response to the first request message, a first response message including at least one of the first information and the second information from the AP;
transmit, through the transceiver, a second request message requesting permission for use of a target IoT device selected from among the at least one connectable IoT device to a first device, which is a first administrator of the target IoT device, via the AP; and
receive, through the transceiver, in response to transmission of the second request message, a second response message including information indicating whether the use is permitted from the first device via the AP.

14. The second device of claim 13, wherein the second device is adapted to operate according to the method of any one of claims 9 to 12.
